# EUROPÄISCHE PATENTSCHRIFT

(11) **EP 1 116 767 B1**
(45) Veröffentlichungstag und Bekanntmachung des Hinweises auf die Patenterteilung: **14.02.2007**
(21) Anmeldenummer: 01100004.9
(22) Anmeldetag: 03.01.2001
(51) Int. Cl.: C09K 9/02, G02F 1/15, C09K 11/06, H05B 33/14, H05B 33/20, C07D 417/00

(54) **Elektrochrome Vorrichtung**
Electrochromic device
Dispositif électrochrome

(30) Priorität: 13.01.2000 DE 10001031
(43) Veröffentlichungstag der Anmeldung: 18.07.2001
(73) Patentinhaber: Bayer Innovation GmbH, 40225 Düsseldorf (DE)
(72) Erfinder: Berneth, Horst, Dr., 51373 Leverkusen (DE); Hünig, Siegfried, Prof. Dr., 97074 Würzburg (DE); Briehn, Christoph Alexander, 89134 Blaustein (DE); Aldenkortt, Sven, Dr., 97076 Würzburg (DE)

(56) Entgegenhaltungen:
- WO-A-97/30134
- WO-A-97/30135
- WO-A-98/05737

## Beschreibung

Die vorliegende Erfindung betrifft eine elektrochrome Vorrichtung sowie elektrochrome Substanzen.

Elektrochrome Vorrichtungen, die ein elektrochromes System enthalten, sind bereits bekannt. Elektrochrome Systeme verändern unter dem Einfluß eines elektrischen Feldes ihre spektrale Absorption.

In WO-A 94/23333 werden elektrochrome Materialien verschiedener Bauweise gegenübergestellt, die aber nicht als Anzeigevorrichtungen verwendet werden:
Bauweise a: Die elektrochromen Substanzen liegen als Film oder Schicht fest auf den Elektroden.
Bauweise b: Die elektrochromen Substanzen werden beim Redoxprozeß auf den Elektroden als Schicht abgeschieden.
Bauweise c: Die elektrochromen Substanzen bleiben permanent in Lösung.

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten der Spannung bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya, **13**, 32-37 (1977), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

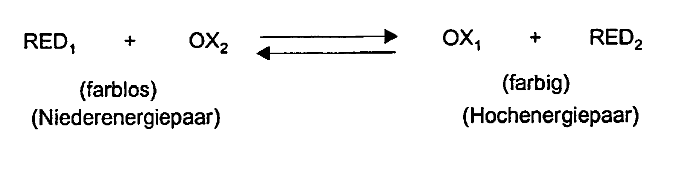

Aus US-A 4 902 108 ist bekannt, dass solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Gemäß WO-A 94/23333 haben derartige Lösungssysteme der Bauweise c jedoch gravierende Nachteile: Die Diffusion der elektrochromen Substanzen in der Lösung bedingt unscharfe Farbgrenzen und verursacht einen hohen Stromverbrauch zur Aufrechterhaltung des gefärbten Zustandes, da die gefärbten Substanzen durch Rekombination und Reaktion an der jeweils gegenüberliegenden Elektrode permanent abgebaut werden.

Dennoch sind für solche elektrochromen Zellen der Bauweise c verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (DE 196 31 728).

Elektrochrome Vorrichtungen bestehen aus einem Paar Glas- oder Kunststoffscheiben, die jeweils auf einer Seite mit einer elektrisch leitfähigen Beschichtung z.B. Indium-Zinn-Oxid (ITO) versehen sind. Mindestens eine dieser Scheiben ist transparent. Im Falle eines Autospiegels ist eine der Scheiben verspiegelt. Aus diesen Scheiben wird eine Zelle aufgebaut, indem sie mit ihrer einander zugewandten elektrisch leitfähig beschichteten Seite mit einem ringförmigen oder rechteckigen Dichtungsring verbunden, vorzugsweise verklebt werden. Der Dichtungsring stellt einen gleichmäßigen Abstand zwischen den Scheiben her, von beispielsweise 0,01 bis 0,5 mm. Diese Zelle ist mit einem elektrochromen Medium befüllt. Über die elektrisch leitfähigen Schichten lassen sich die beiden Scheiben getrennt kontaktieren.

Bei elektrochromen Anzeigevorrichtungen ist mindestens eine der beiden elektrisch leitfähigen Schichten in einzeln kontaktierte Flächensegmente aufgeteilt, die voneinander elektrisch isoliert sind. Die Kontaktierung dieser Flächensegmente erfolgt über elektrische Leitungen, die jede zu einer Kante der zugehörigen Scheibe führen und dort beispielsweise über Klemmen, Lötstellen, Leitlack oder andere elektrisch leitende Verbindungen an eine Stromquelle angeschlossen sind.

Die bekannten elektrochromen Substanzen zeichnen sich in der Regel durch solche Paare von Redoxsubstanzen aus, die nach Reduktion bzw. Oxidation farbige Radikale, Kationradikale oder Anionradikale bilden, die chemisch reaktiv sind. Wie beispielsweise aus Topics in Current Chemistry, Vol. 92, S. 1-44 (1980) bekannt ist, können solche Radikal-(ionen) empfindlich gegenüber Elektrophilen oder Nukleophilen oder auch Radikalen sein. Es muß deshalb zum Erreichen einer hohen Stabilität einer elektrochromen Vorrichtung, die ein solches elektrochromes System enthält, das mehrere tausend Schaltcyclen überstehen soll, dafür gesorgt werden, dass das elektrochrome Medium absolut frei von Elektrophilen, z.B. Protonen, Nukleophilen und Sauerstoff ist. Weiterhin muß dafür gesorgt werden, dass sich solche reaktiven Spezies nicht durch elektrochemische Prozesse an den Elektroden während des Betriebs der elektrochromen Vorrichtung bilden.

Es bestand demnach ein Bedarf an einem elektrochromen System, das wenigstens eine elektrochrome Substanz enthält, die nach Reduktion oder Oxidation nicht in eine radikal-(ion)-ische Spezies übergeht, sondern in reduzierter und oxidierter Form eine geschlossene Elektronenschale besitzt, um die unerwünschte Radikalreaktivität der farbigen Spezies zu vermeiden.

Weiterhin bestand Bedarf an einem elektrochromen System, bei dem die durch Oxidation bzw. Reduktion gebildeten Spezies eine verbesserte Lichtechtheit, hohe Farbstärke und einfach anzupassende Farbnuance haben.

Gegenstand der Erfindung ist demnach eine elektrochrome Vorrichtung, enthaltend zwei Platten oder Folien, von denen wenigstens eine transparent ist und die auf den einander zugewandten Seiten mit einer leitfähigen Schicht versehen sind, wobei wenigstens eine der leitfähigen Schichten transparent ist, wobei durch die Platten oder Folien und einen Dichtungsring ein Volumen definiert ist, in dem sich ein elektrochromes Medium befindet, dadurch gekennzeichnet, dass mindestens ein RED₁ oder ein OX₂ eine elektrochrome Verbindung ist, in der zwei gleiche oder verschiedene farbgebende Einheiten über mindestens eine Brücke so verbunden sind, dass bei Oxidation bzw. Reduktion zwischen den beiden Einheiten eine σ-Bindung gebildet oder gebrochen wird unter Farbwechsel der betreffenden Verbindung.

Für besondere Anwendungsformen sind auch solche erfindungsgemäßen elektrochromen Substanzen gemeint, die in farbgebende Einheiten übergehen, die insbesondere eine starke Absorption besitzen in Spektralbereichen außerhalb des sichtbaren Bereichs, vorausgesetzt, die elektrochrome Substanz selbst zeigt in diesem Bereich keine oder nur eine schwache Absorption. Insbesondere ist hierbei der Bereich des nahen Infrarots gemeint. Die farbgebende Einheiten können dabei zusätzlich auch im sichtbaren Spektralbereich absorbieren, müssen es aber nicht.

Ebenfalls umfaßt sind solche erfindungsgemäße elektrochrome Verbindungen, die nicht farblos oder schwach gefärbt sind, sondern selbst farbig sind und durch Oxidation oder Reduktion unter Bruch oder Bildung einer σ-Bindung eine starke Absorption im sichtbaren Teil des Spektrums ausbilden, die von der der elektrochromen Verbindung hinreichend unterschieden ist. Gemeint sind also z. B. rote elektrochrome Verbindungen, die nach Oxidation oder Reduktion in z. B. blaue Farbstoffe übergehen.

Insbesondere handelt es sich um solche erfindungsgemäße elektrochrome Vorrichtungen, dadurch gekennzeichnet, dass in dem elektrochromen Medium mindestens eine reduzierbare Substanz OX₂ und eine mindestens eine oxidierbare Substanz RED₁ enthalten sind, die farblos oder schwach farbig sind und die durch Elektronenaufnahme an der Kathode bzw. durch Elektronenabgabe an der Anode in ihre jeweiligen Formen RED₂ und OX₁ übergehen, wobei mindestens ein OX₂ und/oder mindestens ein RED₁ eine Substanz ist, die durch Reduktion bzw.
Oxidation unter Bruch oder Bildung einer σ-Bindung in mindestens einen Methinfarbstoff übergeht, und wobei nach Ladungsausgleich zwischen RED₂ und OX₁ jeweils wieder die ursprünglichen Formen OX₂ und RED₁ zurückgebildet werden.

Andere geeignete OX₂ und RED₁, wie sie neben den erfindungsgemäßen, durch Bruch oder Bildung einer σ-Bindung Methinfarbstoffe liefernden, elektrochromen Substanzen vorliegen können, sind insbesondere die weiter oben beschriebenen, aus der Literatur bekannten, elektrochromen Substanzen. Sie werden weiter unten näher beschrieben.

Bevorzugt ist eine elektrochrome Vorrichtung, in der die beiden Redoxzustände der elektrochemischen Verbindung RED₁ bzw. OX₂, die durch Bildung oder Bruch einer σ-Bindung ineinander übergehen, Absorptionsmaxima besitzen, die sich um mindestens 70 nm, vorzugsweise um mindestens 100 nm unterscheiden, wobei wenigstens eines der Absorptionsmaxima im sichtbaren Teil des Spektrums liegt.

Hierbei liegt der langwellig absorbierende Redoxzustand entweder bei geöffneter oder bei geschlossener σ-Bindung vor, wobei dieser langwellig absorbierende Redoxzustand sowohl durch Reduktion als auch durch Oxidation erzeugt werden kann.

Die beiden Redoxzustände OX₂ und RED₂ bzw. RED₁ und OX₁ der elektrochemischen Verbindung entsprechen dabei einem der folgenden Typen 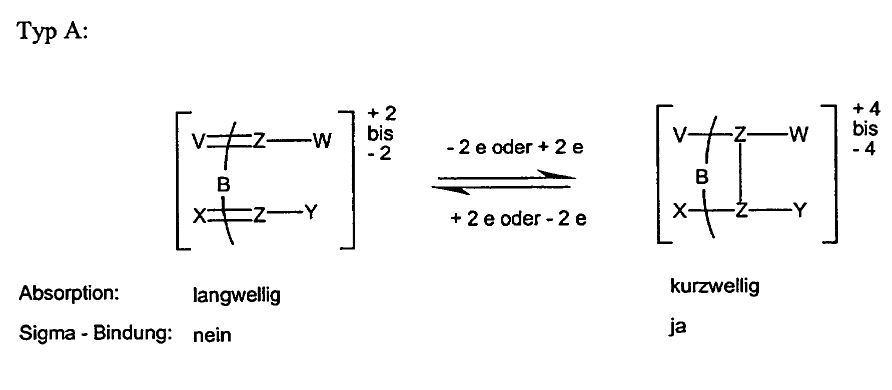 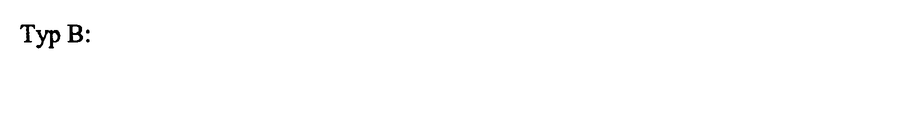 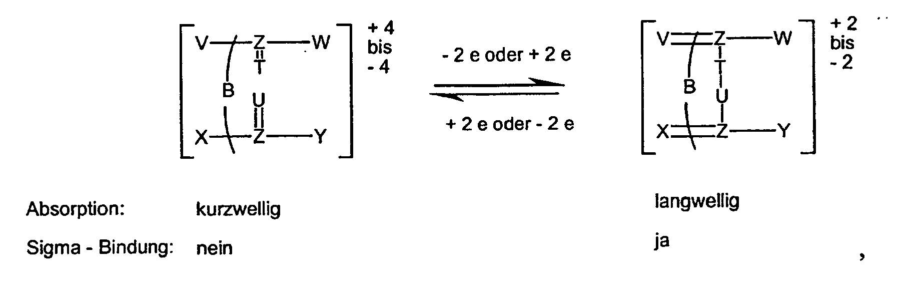 worin
die langwellig absorbierenden Einheiten V=Z-W und X=Z-Y für Methinfarbstoffe stehen
und
- B: für eine Brücke steht.

Die erfindungsgemäße elektrochrome Vorrichtung enthält mindestens ein OX₂ der Formel (I) 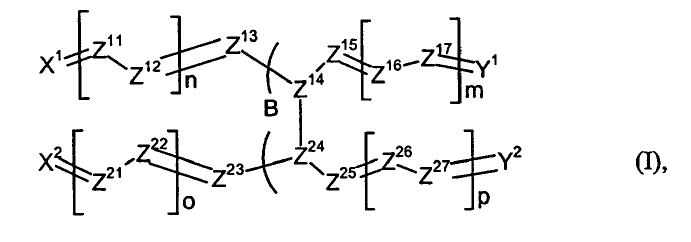 worin
- X¹, X², Y¹ und Y²: unabhängig voneinander für ein Heteroatom wie N, O, S, Se oder P stehen, das im Falle O, S und Se noch einen Substituenten tragen kann und dann positiv geladen ist und im Falle N und P noch zwei Substituenten tragen kann und im zweiten Fall positiv geladen ist,
- Z¹¹ bis Z¹⁷ und Z²¹ bis Z²⁷: unabhängig voneinander C, das noch einen Substituenten trägt, oder N bedeuten,
- B: eine Brücke bedeutet, die zwischen einem der Atome der Gruppe X¹, Z¹¹ bis Z¹³, Z¹⁵ bis Z¹⁷ und Y¹ sowie einem der Atome der Gruppe X², Z²¹ bis Z²³, Z²⁵ bis Z²⁷ und Y² ausgebildet ist, und
- n, m, o und p: unabhängig voneinander eine ganze Zahl von 0 bis 5 bedeuten,
und/oder mindestens ein RED₁ der Formel (II) 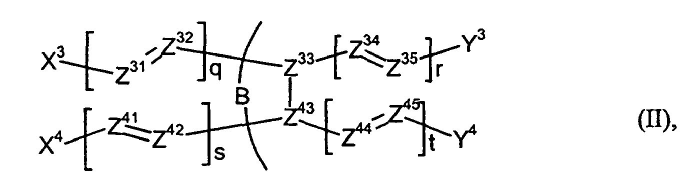 worin
- X³, X⁴, Y³ und Y⁴: unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
- Z³¹ bis Z³⁵ und Z⁴¹ bis Z⁴⁵: unabhängig voneinander C, das noch einen Substituenten trägt, oder N bedeuten,
- B: eine Brücke bedeutet, die zwischen einem der Atome der Gruppe X³, Z³¹, Z³², Z³⁴, Z³⁵ und Y³ sowie einem der Atome der Gruppe X⁴, Z⁴¹, Z⁴², Z⁴⁴, Z⁴⁵ und Y⁴ ausgebildet ist, und
- q, r, s und t: unabhängig voneinander eine ganze Zahl von 0 bis 5 bedeuten,
und/oder mindestens ein RED₁ der Formel (III) 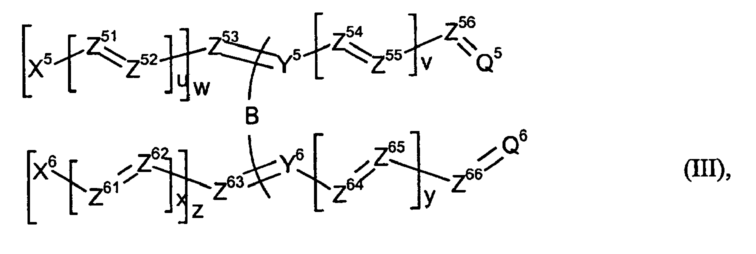 worin
- X⁵ und X⁶: unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
- Y⁵ und Y⁶: unabhängig voneinander für ein Heteroatom wie N oder P oder für C, das noch einen Substituenten trägt, stehen,
- Q⁵ und Q⁶: unabhängig voneinander für eine Heteroatom wie N oder P, die noch einen Substituenten tragen, oder für C stehen, das noch zwei Substituenten trägt,
- Z⁵¹, Z⁵², Z⁵⁴ bis Z⁵⁶ und Z⁶¹, Z⁶², Z⁶⁴ bis Z⁶⁶: unabhängig voneinander C, das noch einen Substituenten trägt, oder N bedeuten
- Z⁵³ und Z⁶³: C bedeuten, das noch einen Substituenten trägt, wenn w bzw. z 1 bedeuten,
- B: eine Brücke bedeutet, die zwischen einem der Atome der Gruppe X⁵, Z⁵¹ bis Z⁵⁶ und Q⁵ sowie einem der Atome der Gruppe X⁶, Z⁶¹ bis Z⁶⁶ und Q⁶ ausgebildet ist,
- w und z: unabhängig voneinander 1 oder 2 bedeuten und
- u, v, x und y: unabhängig voneinander eine ganze Zahl von 0 bis 5 bedeuten.

Hierbei dürfen für n, m, o, p, q, r, s, t, u und/oder v > 1 die Bedeutungen der Atome Z¹¹, Z¹², Z¹⁶, Z¹⁷, Z²¹, Z²², Z²⁶, Z²⁷ in Formel (I), Z³¹, Z³², Z³⁴, Z³⁵, Z⁴¹, Z⁴², Z⁴⁴, Z⁴⁵ in Formel (II) sowie Z⁵¹, Z⁵², Z⁵⁴, Z⁵⁵ in Formel (III) in den einzelnen Wiederholungseinheiten unterschiedlich sein.

So kann z. B. -[-Z¹¹=Z¹²-]ₙ- mit n = 2 p-Phenylen bedeuten, wie die folgende Formel zeigt:

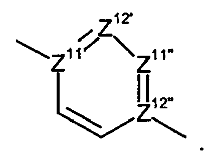

Wenn die Substanzen der Formeln (I), (II) oder (III) in Abhängigkeit von den Bedeutungen von X¹ bis X⁵ und Y¹ bis Y⁵ positive oder negative Überschußladungen aufweisen, sind ihnen in entsprechender Zahl vorzugsweise farblose Anionen X⁻ bzw. Kationen M⁺ zugeordnet.

Bevorzugt bedeuten die Heteroatome O, S und N.

Diese Anionen X⁻ bzw. Kationen M⁺ sind in der Regel redox-inert. Dies bedeutet, dass ihre Redoxpotentiale außerhalb des Bereichs liegen, in dem die Potentiale der elektrochromen Substanzen liegen, d. h. außerhalb eines Bereichs von -1 bis +1 V, vorzugsweise -1.5 bis +1.5 V. Sie können aber auch innerhalb dieses Bereichs redoxaktiv sein, vorausgesetzt ihre Oxidation bzw. Reduktion ist vollständig reversibel und führt zu keinen Nebenprodukten. Beispielsweise sollen sie im Cyclischen Voltammogramm gemessen in dem Lösungsmittel des elektrochromen Mediums mindestens eine reversible Reduktions- bzw. Oxidationsstufe aufweisen. Solche Anionen oder Kationen können auch die Rolle eines RED₁ bzw. OX₂ übernehmen. Beispiele für solche redox-aktive Anionen sind I⁻, I₃⁻, Br⁻, SCN⁻, [Fe(CN)₆]^{3-/4-}, [Co(CN)₆]^{3-/4-}, Fe[Fe(CN)₆]^{0/1-}. Beispiele für redoxaktive Kationen sind alle Metallsalze, die in mindestens zwei Oxidationsstufen vorkommen wie Fe³⁺/Fe²⁺, Cu²⁺/Cu⁺, Ni³⁺/Ni²⁺, Co³⁺/Co²⁺, [Fe(Cyclopentadienyl)₂]^{0/+}.

Unter Substituenten sind hier Wasserstoff oder andere einbindige organische Reste gemeint, beispielsweise Halogen, Alkyl, Cycloalkyl, Aryl, Heteroaryl, Hydroxy, Amino, Cyano, Nitro, -OR¹, -SR¹, -NHR¹, -NR¹₂, -COOR¹, -CONHR¹, -CONR¹₂, -NHCOR¹, -NHSO₂R¹, -NR¹COR¹, -NR¹SO₂R¹, worin R¹ Alkyl, Cycloalkyl, Aryl oder Heteroaryl bedeutet. Alle diese Reste wie Alkyl, Cycloalkyl, Aryl oder Heteroaryl können mindestens einen der oben aufgeführten Reste tragen. Die Substituenten können jedoch auch Teil einer zwei- oder mehrbindigen Brücke sein. Diese Brücken können auf eines oder beide Teilsysteme der Formeln (I), (II) und/oder (III) beschränkt sein. In jedem Fall bedeutet je ein Substituent der beiden Teilsysteme der Formeln (I), (II) und/oder (III) eine Bindung zur Brücke B.

Diese Brücke B ist in Formel (I) zwischen einem der Atome der Gruppe X¹, Z¹¹ bis Z¹³, Z¹⁵ bis Z¹⁷ und Y¹ sowie einem der Atome der Gruppe X², Z²¹ bis Z²³, Z²⁵ bis Z²⁷ und Y² ausgebildet und/oder in Formel (II) zwischen einem der Atome der Gruppe X³, Z³¹, Z³², Z³⁴, Z³⁵ und Y³ sowie einem der Atome der Gruppe X⁴, Z⁴¹, Z⁴², Z⁴⁴, Z⁴⁵ und Y⁴ ausgebildet und/oder in Formel (III) zwischen einem der Atome der Gruppe X⁵, Z⁵¹ bis Z⁵⁶ oder Q⁵ sowie einem der Atome der Gruppe X⁶, Z⁶¹ bis Z⁶⁶ oder Q⁶ ausgebildet.

Mit Brücke B ist hier eine direkte Bindung oder beispielsweise eine der folgenden Gruppierungen gemeint: -(CH₂)ₐ-, -CH=CH-CH=CH-, o-Phenylen, -CH=CH-o-C₆H₄-, -(CH₂)_{b}-o-, m- oder p-C₆H₄-(CH₂)_{c}-, -(CH₂)_{b}-O-(CH₂)_{c}-, -(CH₂)_{b}-NH-(CH₂)_{c}-, wobei diese Brücken noch durch Substituenten, wie sie oben näher beschrieben sind, substituiert sein können und a, b und c unabhängig voneinander eine ganze Zahl von 1 bis 10 bedeuten und b und/oder c zusätzlich 0 bedeuten dürfen.

Über solche Brücken B lassen sich auch mehrere Einheiten der Formeln (I) bis (III) verbinden, so dass oligo- oder polymere elektrochrome Verbindungen entstehen.

Bevorzugt sind solche Brücken B zwischen den beiden Teilsystemen der Formeln (I) bzw. (II), die zusammen mit der Brücke Z¹⁴-Z²⁴ bzw. Z³³-Z⁴³ zur Bildung eines Sechsrings führen. Ebenfalls bevorzugt ist eine Brücke B in Formel (III) zwischen einem der Atome der Gruppe Z⁵⁴ bis Z⁵⁶ und Q⁵ und einem der Atome der Gruppe Z⁶⁴ bis Z⁶⁶ und Q⁶ ausgebildet ist, wobei das entsprechende Atom Z⁵⁴, Z⁵⁵, Z⁵⁶, Z⁶⁴, Z⁶⁵ bzw. Z⁶⁶ C bedeuten muss.

Ebenfalls bevorzugt sind folglich auch elektrochrome Vorrichtungen, dadurch gekennzeichnet, dass wenigstens ein Atom X¹ bis X⁶, Y¹ bis Y⁶ oder Q⁵ oder Q⁶ in der Bedeutung N oder P Bestandteil eines heterocyclischen Rings ist.

Solche heterocyclischen Ringe sind aromatische, quasiaromatische oder teilhydrierte heterocyclische Ringe, beispielsweise Pyridin, Chinolin, Isochinolin, Acridin, Pyrylium, Thiopyrylium, Pyrrol, Indol, Isoindol, Indolizin, Indolin, Imidazol, Benzimidazol, Oxazol, Benzoxazol, Thiazol, Benzthiazol, Isothiazol, Selenazol, Benzselenazol, Pyrazol, Thiadiazol, Triazol, sowie deren teilweise hydrierte Formen, wobei diese Ringe Substiutenten tragen können, wie sie weiter oben definiert sind.

Besonders bevorzugt sind elektrochrome Vorrichtungen, dadurch gekennzeichnet, dass in Formel (I) und/oder (II) und/oder (III) jeweils die Paare X¹ und X², X³ und X⁴, X⁵ und X⁶, Y¹ und Y², Y³ und Y⁴, Y⁵ und Y⁶, Z¹¹ und Z²¹, Z¹² und Z²², Z¹³ und Z²³, Z¹⁴ und Z²⁴, Z¹⁵ und Z²⁵, Z¹⁶ und Z²⁶, Z¹⁷ und Z²⁷, Z³¹ und Z⁴¹, Z³² und Z⁴², Z³³ und Z⁴³, Z³⁴ und Z⁴⁴, Z³⁵ und Z⁴⁵, Z⁵¹ und Z⁶¹, Z⁵² und Z⁶², Z⁵³ und Z⁶³, Z⁵⁴ und Z⁶⁴, Z⁵⁵ und Z⁶⁵, Z⁵⁶ und Z⁶⁶, Q⁵ und Q⁶, n und o, m und p, q und s, r und t, u und x, v und y, w und z gleich sind.

Gegenstand der Erfindung sind elektrochrome Vorrichtungen, dadurch gekennzeichnet, dass die durch oxidativen oder reduktiven Bindungsbruch oder Bindungsbildung entstehenden Methinfarbstoffe einer der folgenden Klassen angehören:

Streptocyanine, Hemicyanine, phenyloge Hemicyanine, Cyanine, Oxonole, Betaine, Neutromethine, Phenazine, Oxazine, Thiazine, Bisazine, ggf. verbrückte Diphenylmethane, ggf. verbrückte Triphenylmethane, (Mono - oder Di-)-phenyl-(mono- oder di-)-heteroarylmethane, Triheteroarylmethane, Acridine, Xanthene, Thioxanthene. Bevorzugt sind kationische Methinfarbstoffe. Besonders bevorzugt sind Hemicyanine, phenyloge Hemicyanine, Cyanine, ggf. verbrückte Diphenylmethane, ggf. verbrückte Triphenylmethane, (Mono - oder Di-)-phenyl-(mono- oder di-)-hetero-arylmethane, Triheteroarylmethane.

Die Definition dieser Farbstoffklassen ist R. Raue, Azine Dyes in Ullmann's Encyclopedia of Industrial Chemistry, 5^{th} edition, vol. A3, Seite 213-238 (1985); R. Raue, Methine Dyes and Pigments in Ullmann's Encyclopedia of Industrial Chemistry, 5^{th} edition, vol. A16, Seite 387-534 (1990) und Th. Gessner, U. Mayer, Triarylmethane and Diarylmethane Dyes in Ullmann's Encyclopedia of Industrial Chemistry, 5^{th} edition, vol. A27, Seite 179-227 (1996) entnommen. Dort sind auch zahllose Beispiele solcher Farbstoffe aufgeführt, die veranschaulichen, welche Methinfarbstoffe im Sinne der Erfindung durch Bindungsbruch bzw. Bindungsbildung entstehen können. Im Falle, dass die beiden Teilsysteme in Formel (I) und/oder (II) oder zwei Formeln (III) durch mindestens eine der oben definierten Brücken miteinander verbunden sind, sind die nach oxidativem bzw. reduktivem Bruch oder Bildung einer σ-Bindung entstehenden Methinfarbstoffe ebenfalls über diese Brücke(n) miteinander verbunden. In den Farbstoffbeispielen der eben zitierten Literatur müssen dann an geeigneter Stelle unter Ersatz eines Wasserstoffs oder eines anderen Substituenten solche Brücken angreifen. Das farbgebende System des Farbstoffs wird dadurch nicht oder nur unwesentlich beeinflußt.

Besonders bevorzugt im Sinne der Erfindung sind elektrochrome Vorrichtungen, die als OX₂ der Formel (I) beispielsweise eine Verbindung enthalten, die nach reduktivem Bruch der σ-Bindung in einen Methinfarbstoff der Formeln 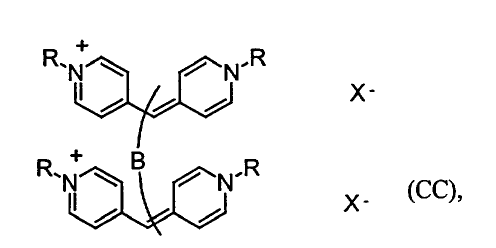 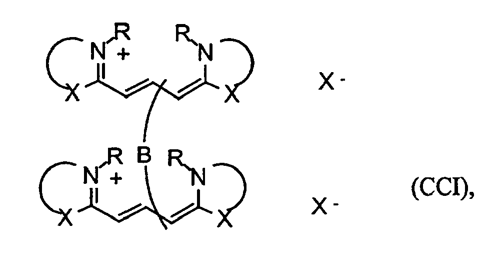 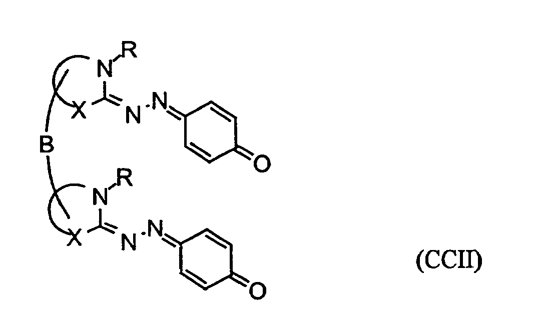 übergehen.

Ebenfalls besonders bevorzugt im Sinne der Erfindung sind elektrochrome Vorrichtungen, die als RED₁ der Formel (II) beispielsweise eine Verbindung enthalten, die nach oxidativem Bruch der σ-Bindung in einen Methinfarbstoff der Formeln 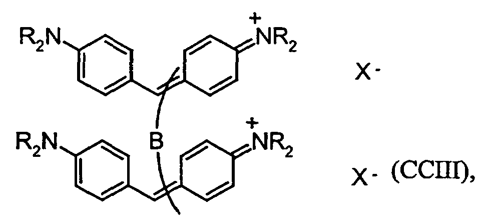 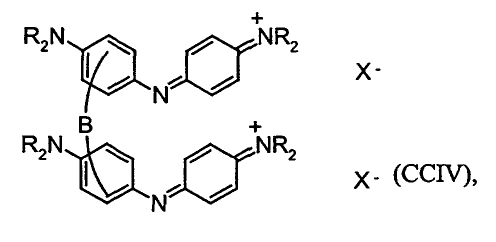 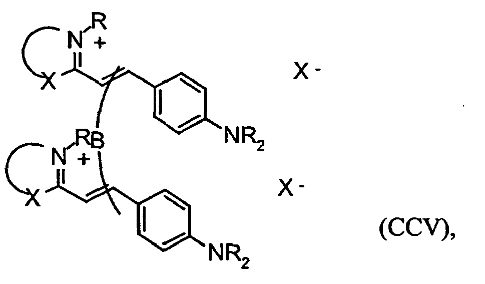 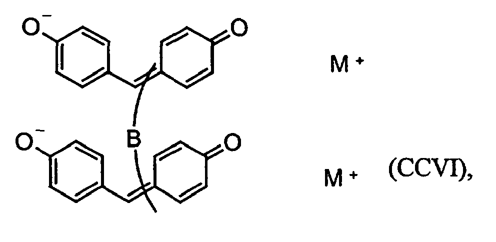 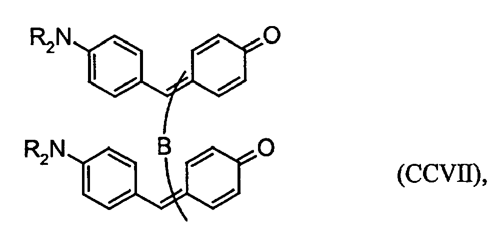 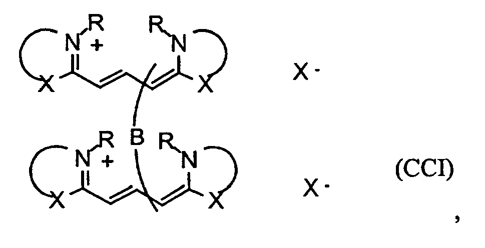 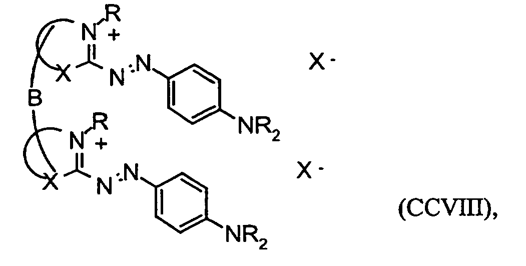 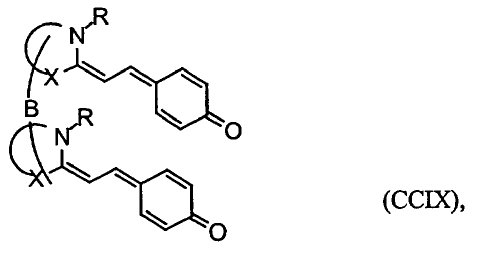 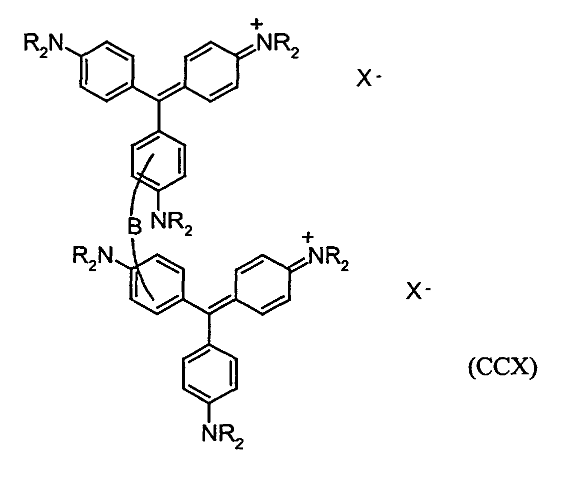 übergehen.

Ebenfalls besonders bevorzugt im Sinne der Erfindung sind elektrochrome Vorrichtungen, die als RED₁ der Formel (III) beispielsweise eine Verbindung enthalten, die nach oxidativer Bildung der σ-Bindung in einen Methinfarbstoff der Formeln 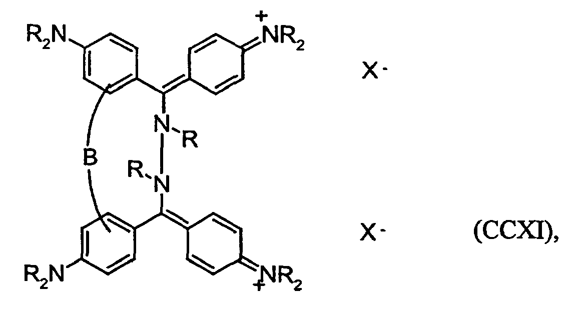 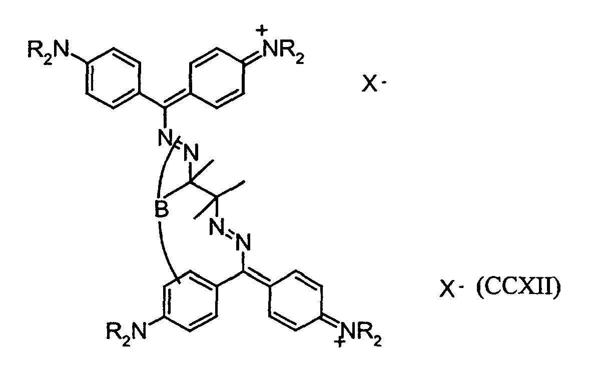 übergehen.

Die Position der Brücke B in den vorstehenden Formeln ist willkürlich. Sie soll nur andeuten, dass die beiden Molekülteile verbrückt sind. Angriffspunkte der Brücke B an den beiden Molekülteilen sind weiter oben genau definiert.

Mit den Formeln (CC) bis (CCXII) sind auch die entsprechenden Vinylogen und/oder Phenylogen gemeint und die Methinkette kann N enthalten, d. h., dass z. B. Formel (CCIII) auch für 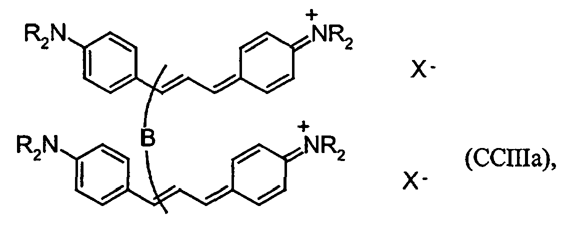 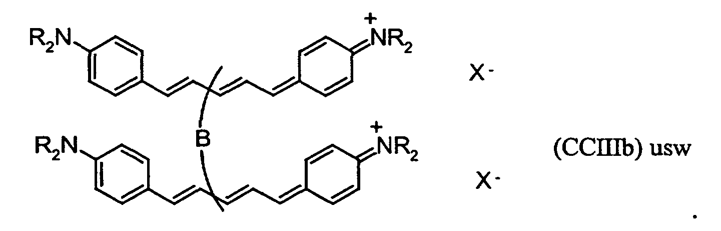 und Formel (CCV) auch für 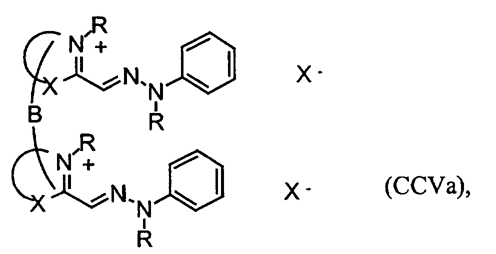 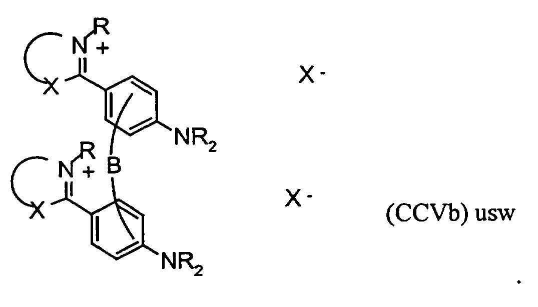 steht. Die aromatischen und chinoiden Ringe können anelliert und/oder durch die weiter oben aufgeführten Reste substituiert sein, z. B. 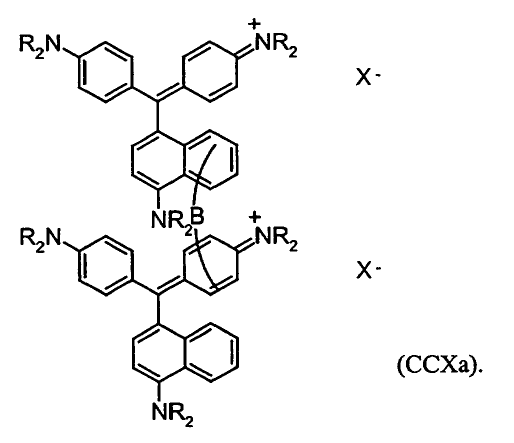 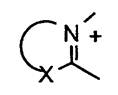 und 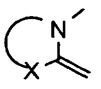 stehen für die Reste von aromatischen oder quasiaromatischen heterocyclischen Ringen, z. B. Pyridin, Chinolin, Isochinolin, Acridin, Pyrylium, Thiopyrylium, Pyrrol, Indol, Isoindol, Indolizin, Indolin, Imidazol, Benzimidazol, Oxazol, Benzoxazol, Thiazol, Benzthiazol, Isothiazol, Selenazol, Benzselenazol, Pyrazol, Thiadiazol, Triazol.

R bedeutet Reste wie Alkyl, Cycloalkyl, Aralkyl oder Aryl.

Elektrochrome Verbindungen OX₂ der Formel (I), die zu den aufgeführten Methinfarbstoffen der Formeln (CC) bis (CCII) führen, sind dann z. B. folgende ((C) bis (CII)):

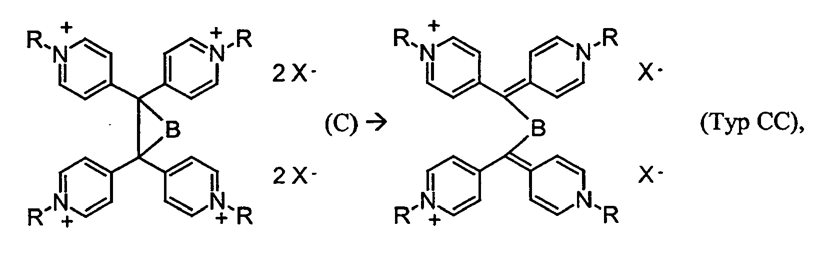

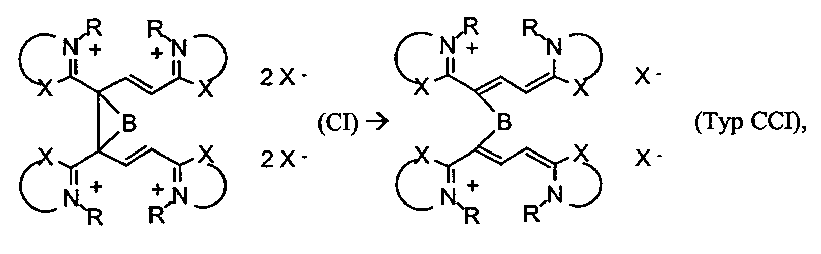

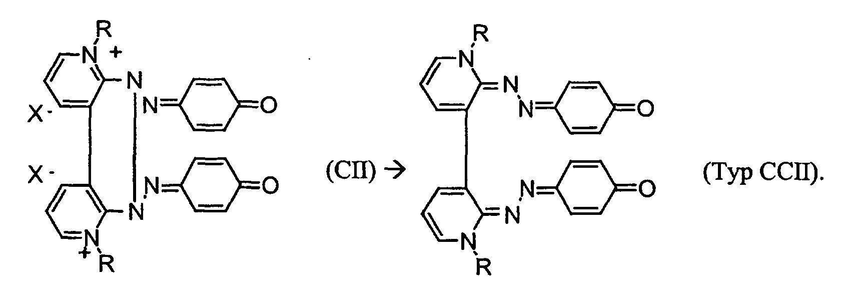

Elektrochrome Verbindungen RED₁ der Formel (II), die zu den aufgeführten Methinfarbstoffen der Formeln (CCIII) bis (CCX) führen, sind dann z. B. folgende ((CIII) bis (CXI)):

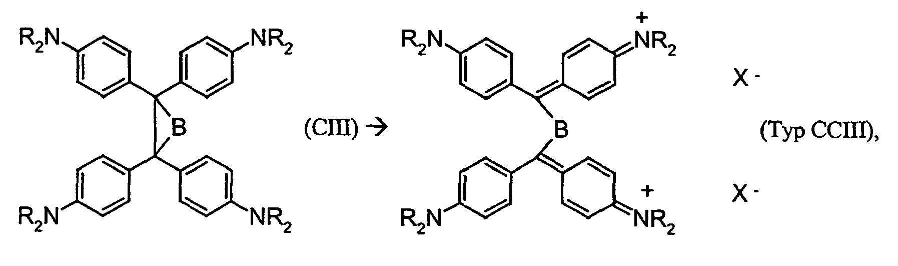

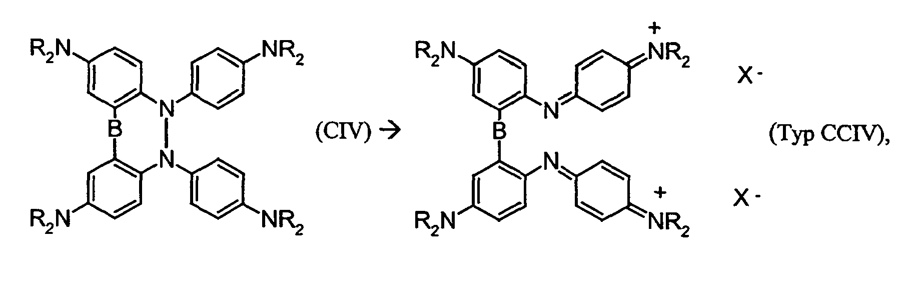

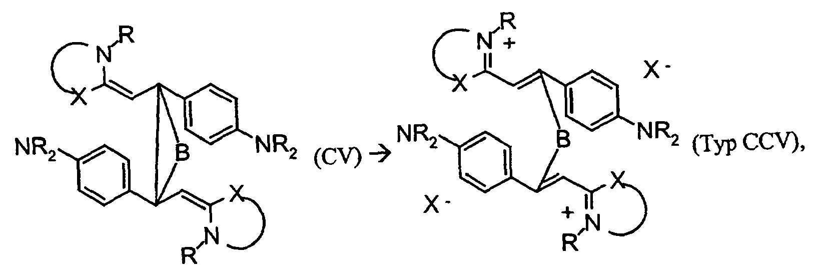

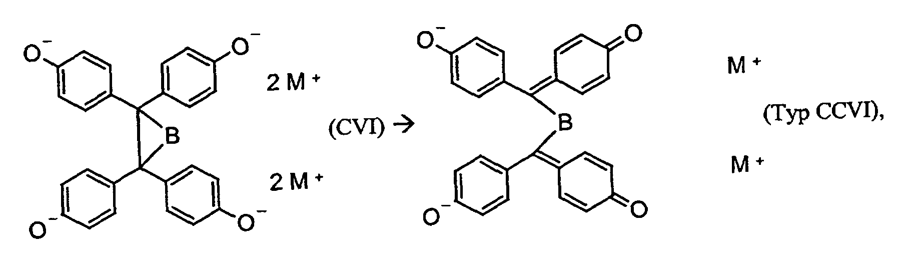

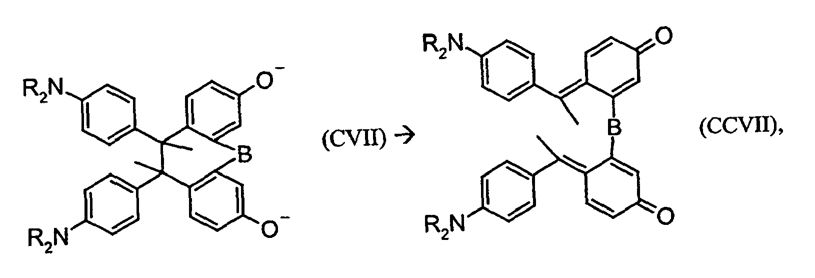

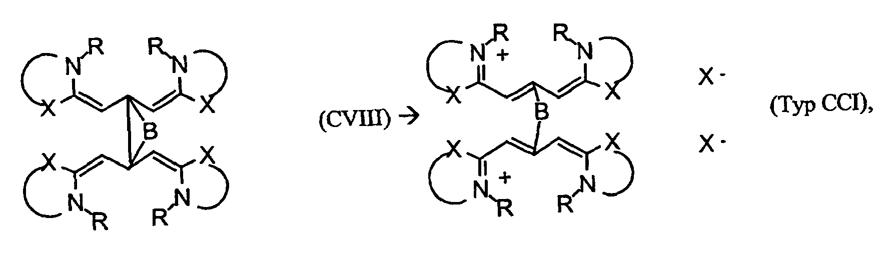

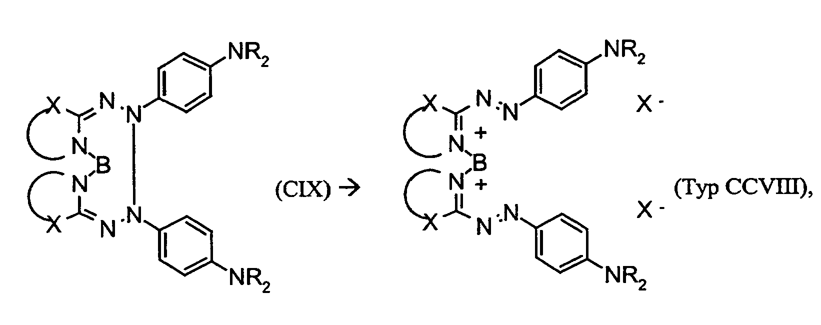

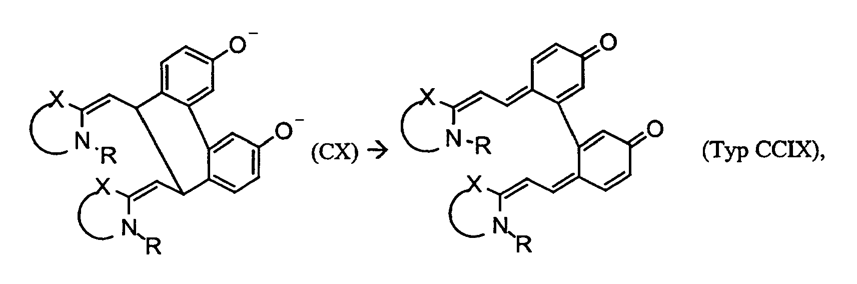

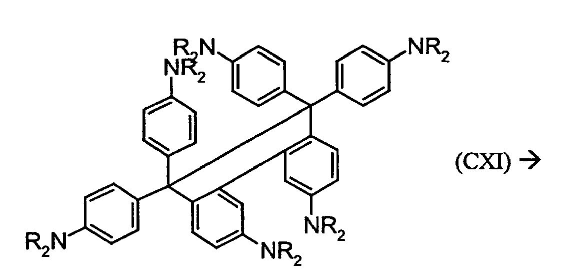

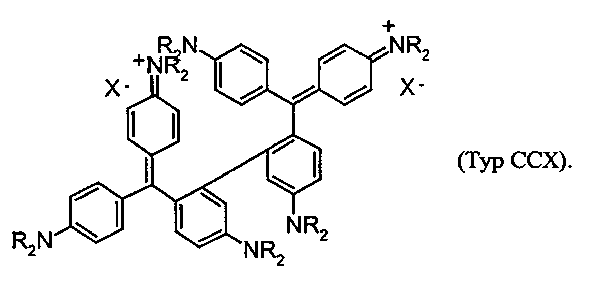

Elektrochrome Verbindungen RED₁ der Formel (III), die zu den aufgeführten Methinfarbstoffen der Formeln (CCXI) bis (CCXII) führen, sind dann z. B. folgende ((CXII) bis (CXIII)):

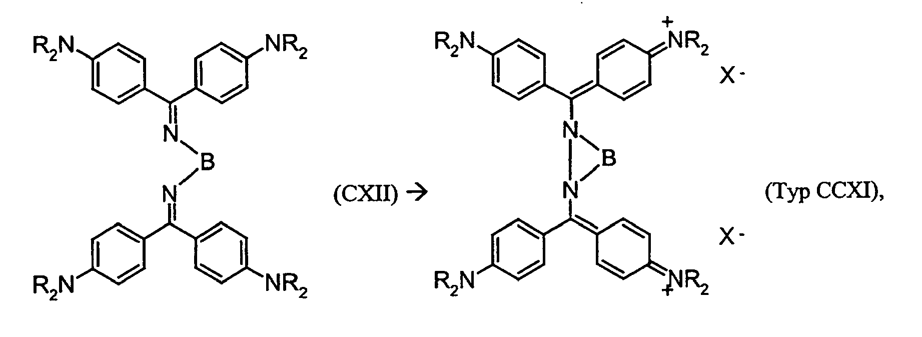

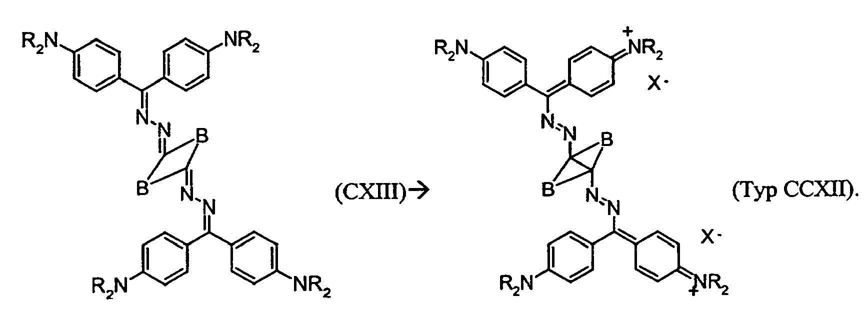

B steht für eine der oben näher beschriebenen Brücken.

Neben diesen erfindungsgemäßen Redoxsubstanzen der Formeln (I), (II) und (III) können im elektrochromen Medium zusätzlich auch alle anderen bekannten elektrochromen Substanzen enthalten sein. Namentlich, wenn nur eine Redoxsubstanz der Formel (I), (II) bzw. (III) im elektrochromen Medium enthalten ist, ist eine weitere Redoxsubstanz RED₁ bzw. OX₂ enthalten. Solche Redoxsubstanzen sind beispielsweise aus US-P 4.902.108, WO 97/30134, WO 97/30135 sowie K. Deuchert, S. Hünig, Angew. Chem. **90,** 927-938 (1978) und S. Hünig, H. Berneth, Topics in Current Chemistry **92**, 1-44 (1980) bekannt oder lassen sich analog herstellen. Ebenfalls geeignet sind Metallsalze oder Metallkomplexe, vorzugsweise von solchen Metallen, deren Oxidationsstufen sich um 1 unterscheiden, z. B. Fe(C₅H₅)₂^{0/+}, Fe₄[Fe(CN)₆]₃^{0/4-}, Lu(Pc)^{2+ bis 2-} (Pc = Phthalocyanin), Fe[Fe(CN)₆]^{0/1-}. Ebenfalls geeignete Redoxsubstanzen sind die oben bereits erwähnten redox-aktiven Anionen X⁻ und/oder Kationen M⁺. Es können auch Mischungen solcher Redoxsubstanzen eingesetzt werden.

Die Mischungsverhältnisse sind in weiten Grenzen variabel. Sie erlauben die Optimierung eines gewünschten Farbtons oder Schwärzegrades und/oder die Optimierung der gewünschten Dynamik der Vorrichtung.

Ebenfalls Gegenstand der Erfindung ist eine elektrochrome Verbindung, in der zwei gleiche oder verschiedene farbgebende Einheiten über mindestens eine Brücke so verbunden sind, dass bei Oxidation bzw. Reduktion zwischen den beiden Einheiten eine σ-Bindung gebildet oder gebrochen wird unter Farbwechsel der betreffenden Verbindung.

Es handelt sich hierbei um eine elektrochrome Verbindung RED₁ bzw. OX₂, deren beide Redoxzustände, die durch Bildung oder Bruch einer σ-Bindung ineinander übergehen, Absorptionsmaxima besitzen, die sich um mindestens 70 nm, vorzugsweise um mindestens 100 nm unterscheiden, wobei wenigstens eines der Absorptionsmaxima im sichtbaren Teil des Spektrums liegt.

Der langwellig absorbierende Redoxzustand der elektrochromen Verbindung RED₁ bzw. OX₂ liegt entweder bei geöffneter oder bei geschlossener σ-Bindung vor, wobei dieser langwellig absorbierende Redoxzustand sowohl durch Reduktion als auch durch Oxidation erzeugt werden kann.

Bevorzugt handelt es sich bei der vorstehend beschriebenen elektrochromen Verbindung um eine solche, die einem der Redoxzustände der folgenden Typen 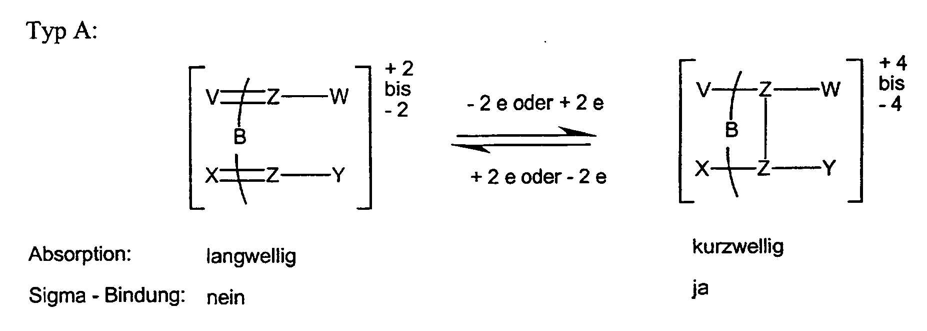 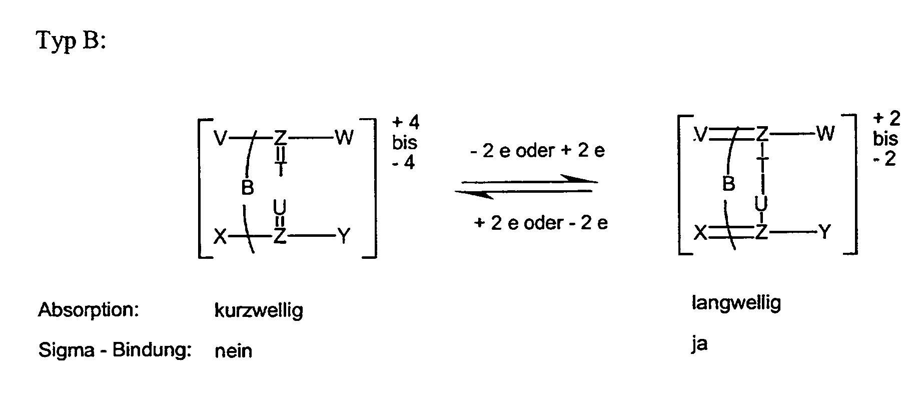 entspricht,
worin
die langwellig absorbierenden Einheiten V=Z-W und X=Z-Y für Methinfarbstoffe stehen
und
- B: für eine Brücke steht.

Besonders bevorzugt entspricht die elektrochrome Verbindung der Formel (I) 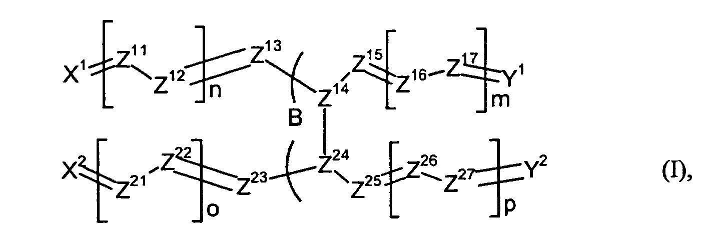 worin
- X¹, X², Y¹ und Y²: unabhängig voneinander für ein Heteroatom wie N, O, S, Se oder P stehen, das im Falle O, S und Se noch einen Substituenten tragen kann und dann positiv geladen ist und im Falle N und P noch ein oder zwei Substituenten tragen kann und im zweiten Fall positiv geladen ist,
- Z¹¹ bis Z¹⁷ und Z²¹ bis Z²⁷: unabhängig voneinander C, das noch einen Substituenten trägt, oder N bedeuten,
- B: eine Brücke bedeutet, die zwischen einem der Atome der Gruppe X¹, Z¹¹ bis Z¹³, Z¹⁵ bis Z¹⁷ und Y¹ sowie einem der Atome der Gruppe X², Z²¹ bis Z²³, Z²⁵ bis Z²⁷ und Y² ausgebildet ist, und
- n, m, o und p: unabhängig voneinander eine ganze Zahl von 0 bis 5 bedeuten.

Ebenfalls bevorzugt entspricht die elektrochrome Verbindung der Formel (II) 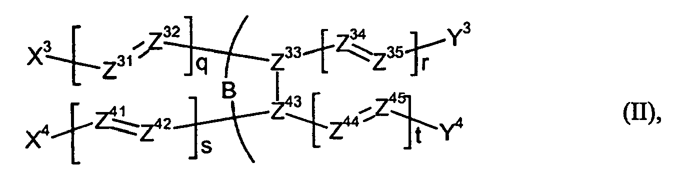 worin
- X³, X⁴, Y³ und Y⁴: unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
- Z³¹ bis Z³⁵ und Z⁴¹ bis Z⁴⁵: unabhängig voneinander C, das noch einen Substituenten trägt, oder N bedeuten,
- B: eine Brücke bedeutet, die zwischen einem der Atome der Gruppe X³, Z³¹, Z³², Z³⁴, Z³⁵ und Y³ sowie einem der Atome der Gruppe X⁴, Z⁴¹, Z⁴², Z⁴⁴, Z⁴⁵ und Y⁴ ausgebildet ist, und
- q, r, s und t: unabhängig voneinander eine ganze Zahl von 0 bis 5 bedeuten,
unter der Einschränkung, dass nicht gleichzeitig
- X³, X⁴, Y³ und Y⁴: Dimethylamino oder Methoxy oder X³-X⁴ und/oder Y³-Y⁴ für eine Brücke der Formel -O- stehen,
- (Z³¹=Z³²)_{q}, (Z⁴¹=Z⁴²)ₛ, (Z³⁴=Z³⁵)ᵣ und (Z⁴⁴=Z⁴⁵)ₜ: o- oder p-Phenylen,
- Z³³-Z⁴³: einen tetravalenten Rest der Formel 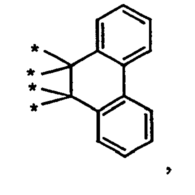
in dem die gesternten (*) Bindungen für die Anknüpfungsstellen stehen,
bedeuten.

Ebenfalls bevorzugt entspricht die elektrochrome Verbindung der Formel (III) 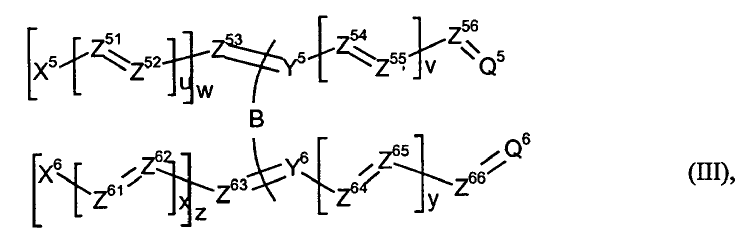 worin
- X⁵ und X⁶: unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
- Y⁵ und Y⁶: unabhängig voneinander für ein Heteroatom wie N oder P oder für C, das noch einen Substituenten trägt, stehen,
- Q⁵ und Q⁶: unabhängig voneinander für eine Heteroatom wie N oder P, die noch einen Substituenten tragen, oder für C stehen, das noch zwei Substituenten trägt,
- Z⁵¹, Z⁵², Z⁵⁴ bis Z⁵⁶ und Z⁶¹, Z⁶², Z⁶⁴ bis Z⁶⁶: unabhängig voneinander C, das noch einen Substituenten trägt, oder N bedeuten
- Z⁵³ und Z⁶³: C bedeuten, das noch einen Substituenten trägt, wenn w bzw. z 1 bedeuten,
- B: eine Brücke bedeutet, die zwischen einem der Atome der Gruppe X⁵, Z⁵¹ bis Z⁵⁶ und Q⁵ sowie einem der Atome der Gruppe X⁶, Z⁶¹ bis Z⁶⁶ und Q⁶ ausgebildet ist,
- w und z: unabhängig voneinander 1 oder 2 bedeuten und
- u, v, x und y: unabhängig voneinander eine ganze Zahl von 0 bis 5 bedeuten.

Mit Brücke B ist hier eine direkte Bindung oder beispielsweise eine der folgenden Gruppierungen gemeint: -(CH₂)ₐ-, -CH=CH-CH=CH-, o-Phenylen, -CH=CH-o-C₆H₄-, -(CH₂)_{b}-o-, m- oder p-C₆H₄-(CH₂)_{c}-, -(CH₂)_{b}-O-(CH₂)_{c}-, -(CH₂)_{b}-NH-(CH₂)_{c}-, wobei diese Brücken noch durch Substituenten, wie sie oben näher beschrieben sind, substituiert sein können und a, b und c unabhängig voneinander eine ganze Zahl von 1 bis 10 bedeuten und b und/oder c zusätzlich 0 bedeuten dürfen.

Besonders bevorzugt bildet die Brücke B, die von den Substituenten zweier Atome der Gruppen X, Y, Z oder Q gebildet wird, einen Sechsring.

Aus Angew. Chem. **109,** 1387 (1997) und Chem. Commun. **1998**, 2193 sind elektrochrome Verbindungen bekannt, die unter Formel (II) fallen. Die Verwendung für elektrochrome Vorrichtungen ist jedoch nicht beschrieben.

In den oben genannten Substituentenbedeutungen sind Alkylreste, auch abgewandelte, wie z. B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie C₁- bis C₄-Alkoxy, Fluor, Chlor, Hydroxy, Cyano, C₁- bis C₄-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆-Alkoxycarbonyl oder Nitro. Zwei benachbarte Reste können auch einen Ring bilden.

Unter gegebenenfalls benzanellierten aromatischen oder quasiaromatischen fünf-oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-C₁- bis C₆-alkylamino, C₁- bis C₆-Alkoxycarbonyl, C₁- bis C₆-Alkylsulfonyl, C₁- bis C₆- Alkanoylamino, Phenyl oder Naphthyl. Zwei benachbarte Reste können auch einen Ring bilden.

Ein weiterer Gegenstand der Erfindung ist ein Verfahren zur Herstellung der erfindungsgemäßen elektrochromen Substanzen der Formeln (I), (II) und (III). Näheres hierzu ist den Beispielen zu entnehmen.

Das erfindungsgemäße elektrochrome Medium enthält vorzugsweise mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Im Falle oligomerer oder polymerer elektrochromer Verbindungen, die durch Verbrückung mehrerer Einheiten der Formeln (I) bis (III) wie oben beschrieben aufgebaut sein können, kann auf das Lösungsmittel auch verzichtet werden. Die Verbindungen werden dann beispielsweise in Form von Filmen oder Folien eingesetzt.

Das erfindungsgemäße elektrochrome Medium oder die erfindungsgemäße elektrochrome Lösung können mindestens ein inertes Leitsalz enthalten. Insbesondere wenn wenigstens eine der Substanzen des Redoxpaares RED₁/OX₂ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X- in ladungstragenden elektrochromen Substanzen der Formeln (I) bis (III) kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanido-undecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z. B. Polyacrylat, Polymethacrylat (Luctite L ^{®}), Polycarbonat oder Polyurethan.

Als weitere Zusätze für das elektrochrome Medium kommen UV-Absorber in Frage. Beispiele sind UVINUL^{®} 3000 (2,4-Dihydroxybenzophenon, BASF), SANDUVOR^{®} 3035 (2-Hydroxy-4-n-octyloxybenzophenon, Clariant), Tinuvin^{®} 571 (2-(2H-Benzotriazol-2-yl)-6-dodecyl-4-methylphenol, Ciba), Cyasorb 24^{™} (2,2'-Dihydroxy-4-methoxybenzophenon, American Cyanamid Company), UVINUL^{®} 3035 (Ethyl-2-cyano-3,3-diphenylacrylat, BASF), UVINUL^{®} 3039 (2-Ethylhexyl-2-cyano-3,3-diphenylacrylat, BASF), UVINUL^{®} 3088 (2-Ethylhexyl-p-methoxycinnamat, BASF), CHIMASSORB^{®} 90 (2-Hydroxy-4-methoxy-benzophenon, Ciba), SANDUVOR^{®} PR-25 (4-Methoxybenzylidenmalonsäuredimethylester, Clariant).

Bevorzugt sind die fünf Letztgenannten. Ebenfalls bevorzugt sind Mischungen von UV-Absorbern, beispielsweise der vier Letztgenannten. Bevorzugt ist die Mischung aus UVINUL^{®} 3039 und CHIMASSORB^{®} 90.

Weitere Zusätze können Gelbfilter sein wie z. B.

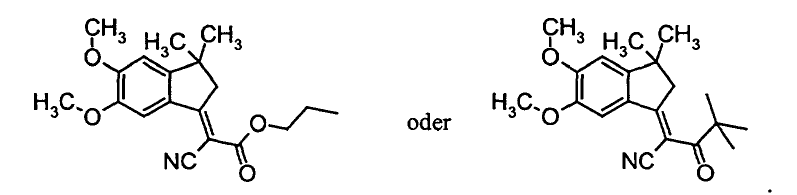

Die UV-Absorber oder Gelbfilter werden im Bereich 0.01 bis 2 mol/l, vorzugsweise 0.04 bis 1 mol/l eingesetzt.

Das elektrochrome Medium enthält die elektrochromen Substanzen OX₂ und RED₁, insbesondere die der Formeln (I) bis (III) jeweils in einer Konzentration von mindestens 10⁻⁴ mol/l, vorzugsweise 0.001 bis 0.5 mol/l. Die Gesamtkonzentration aller enthaltenen elektrochromen Substanzen liegt vorzugsweise unter 1 mol/l.

Zum Betrieb der erfindungsgemäßen elektrochromen Vorrichtung wird eine konstante, gepulste oder in ihrer Amplitude veränderliche, beispielsweise sinus-rechteck-oder dreieckförmige veränderliche, Gleichspannung benutzt.

Es kann jedoch auch Wechselspannung verwendet werden, also eine Spannung, deren Polarität sich mit einer bestimmten Frequenz verändert. Diese Spannungsänderung kann in Rechteckform, Dreieckform, Sinusform oder in beliebig anderer Form erfolgen. Insbesondere können die Phasen entgegengesetzter Polarität unterschiedlich lang sein.

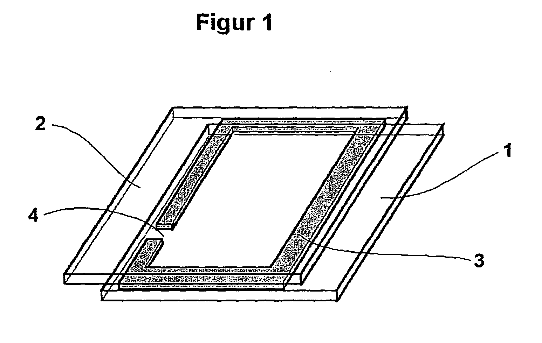

Die Frequenz der Wechselspannung bzw. der gepulsten bzw. der amplitudenver-änderlichen Gleichspannung kann im Bereich von 10⁻² bis 10⁴ Hz, vorzugsweise 10⁻¹ bis 10³ Hz, besonders bevorzugt 10 bis 5x10² Hz liegen. Die Frequenz kann auch während des Betriebs veränderlich sein. Eine besonders bevorzugte Form der frequenzveränderlichen Wechselspannung sind die in Fig. 1 gezeigte rechteckförmige Wechselspannung, sowie Abwandlungen davon mit derselben Frequenzfolge, aber mit dreieck- oder sinusförmigem Verlauf.

Die Amplitude der angelegten Spannung hängt von der gewünschten Farbtiefe und von den Reduktions- bzw. Oxidationspotentialen der verwendeten OX₂ und RED₁ ab. Die Differenz der Reduktions- und Oxidationspotentiale ist ein Richtwert für die erforderliche Spannung, jedoch kann die elektrochrome Vorrichtung bereits bei niedrigerer oder auch mit höherer Spannung betrieben werden.

Wird die Spannung abgeschaltet, so entfärbt sich die erfindungsgemäße elektrochrome Vorrichtung wieder. Diese Löschung kann dadurch beschleunigt werden, dass die kontaktierten Segmente bzw. Platten kurzgeschlossen werden. Auch durch mehrmaliges Umpolen der Spannung, gegebenenfalls bei gleichzeitiger Verringerung der Spannung, kann die Anzeige sehr rasch gelöscht werden.

Durch Variation der Schichtdicke der elektrochromen Vorrichtung, der Viskosität der elektrochromen Lösung und/oder durch die Auswahl von elektrochromen Substanzen im Hinblick auf ihre Diffusions- oder Driftfähigkeit lassen sich die Einschalt- und Ausschaltzeiten der Anzeigevorrichtung in weiten Grenzen beeinflussen. So zeigen beispielsweise dünne Schichten kürzere Schaltzeiten als dicke. Die Größe der Moleküle des elektrochromen Mediums, insbesondere bei den über B verbrückten oder den oligo- oder polymeren Systemen beeinflußt die Diffusions- oder Driftfähigkeit. Je größer die Moleküle sind, desto geringer ist ihre Diffusions- und Driftfähigkeit. Auch der Ladungszustand der Moleküle beeinflußt die Driftfähigkeit. Je höher die Ladung bei gleicher Molekülgröße ist, desto größer ist die Driftgeschwindigkeit. Es lassen sich also schnell und langsam schaltbare Vorrichtungen bauen, die den jeweiligen Einsatzzwecken optimal angepaßt sind.

Die Vorrichtung kann in einem Stromspar- oder Refresh-Modus betrieben werden. Im Stromspar- oder Refresh-Modus wird die an der Vorrichtung anliegende Gleichspannung oder Wechselspannung immer wieder unterbrochen. In den spannungsfreien Phasen sind die Kontakte der Vorrichtung nicht leitfähig miteinander verbunden. Die Phasen mit Spannung und die spannungsfreien Phasen wechseln sich ab und können von gleicher oder unterschiedlicher Dauer sein. In einer bevorzugten Betriebsform sind die Phasen, in denen Spannung anliegt, kürzer als die Phasen ohne Spannung. Das Verhältnis kann zwischen 1:1,5 bis 1:30, vorzugsweise zwischen 1:2 und 1:10 liegen. Die absolute Dauer der Phasen kann sehr unterschiedlich sein und hängt im wesentlichen von der Bauform der Vorrichtung ab. Mit zunehmender Viskosität des elektrochromen Mediums und/oder Schichtdicken der Vorrichtung kann die absolute Dauer der Phasen zunehmen. Bei Schichtdicken von 100 bis 400 µm kann die Phasendauer im Bereich von 0,5 bis 20 Sekunden liegen. Bei niedrig viskosem elektrochromem Medium und/oder bei geringen Schichtdicken der Vorrichtung, z.B. 5 bis 50 µm, kann die absolute Dauer unter einer Sekunde liegen, beispielsweise 0,001 bis 0,5 Sekunden, vorzugsweise 0,01 bis 0,1 Sekunden. Durch die spannungfreien und damit stromlosen Phasen werden je nach Verhältnis der Phasenlängen erhebliche Mengen an elektrischem Strom eingespart. Bei einem Verhältnis von 1:9 werden z.B. 90 % des Stroms im Vergleich zum Dauerbetrieb gespart. Durch die Bauart der Vorrichtung und die daran angepaßte absolute Phasenlänge wird ein Schwanken oder Flackern der Intensität der eingeschalteten elektrochromen Vorrichtung oder ihrer Segmente oder Pixel sowie eine Unschärfe der Segmente oder Pixel durch Diffusion während der spannungslosen Phasen vermieden.

Spezielle Ausführungsformen der erfindungsgemäßen elektrochromen Vorrichtung können beispielsweise die folgenden sein, die ebenfalls Gegenstand der Erfindung sind. Dabei werden zwei Grundtypen unterschieden:
Typ 1: vollflächige elektrochrome Vorrichtung.
Typ 2: elektrochrome Anzeigevorrichtungen mit strukturierten Elektroden.

**Typ 1 (unverspiegelt):** aus dem Bereich Lichtschutz/ Lichtfilter: Fensterscheiben für z.B. Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art.

Aus dem Bereich Sicherheit/ Geheimhaltung: Trennscheiben für z.B. Raumteiler in z.B. Büros, Straßenfahrzeugen, Flugzeugen, Eisenbahnen, Sichtschutzscheiben an z.B. Bankschaltern, Türverglasungen, Scheiben für z.B. Motorrad- oder Pilotenhelme.

Aus dem Bereich Design: Verglasung von Backöfen, Mikrowellengeräten, anderen Haushaltsgeräten, Möbeln.

Aus dem Bereich Anzeigen: Spannungsmesser, z. B. Batterieprüfer, Tankanzeigen, Tachometer.

**Typ 1 (verspiegelt):** Spiegel jeglicher Art, z. B. für Straßenfahrzeuge, Eisenbahnen, insbesondere plane, sphärische, asphärische Spiegel und Kombinationen daraus, z.B. sphärisch/asphärisch, Spiegelverglasung in Möbeln.

**Typ 2:** Anzeigevorrichtungen jeglicher Art, z. B. Segment- oder Matrixanzeigen, z.B. für Uhren, Computer, Elektrogeräte, Elektronikgeräte wie Radios, Verstärker, Fernseher, CD-Player etc., Zielanzeige in Bussen und Zügen, Abfahrts- oder Abfluganzeigen in Bahnhöfen und Flughäfen, Flachbildschirme, alle Anwendungen, die unter Typ 1 genannt sind, die mindestens eine schaltbare, statische oder variable Anzeigevorrichtung enthalten, z. B. Trennscheiben, die Anzeigen wie z.B. "Bitte nicht stören", "Schalter nicht besetzt" enthalten, z.B. Auto-Spiegel, die Anzeigen beliebiger Art enthalten wie z. B. Anzeige der Temperatur, Störungen im Fahrzeug (z.B. Öltemperatur, offene Türen), Zeit, Himmelsrichtung etc.

### Beispiele

### Beispiel 1

a) 8,2 g o-Xylylendibromid und 5,6 g γ-Picolin wurden in 60 ml γ-Butyrolacton 2 h bei 80°C gerührt. Nach dem Abkühlen wurde abgesaugt, mit 3 x 10 ml γ-Butyrolacton gewaschen und im Vakuum bei 50°C getrocknet. Man erhielt 11,6 g (86 % d. Th.) eines weißen Pulvers der Formel 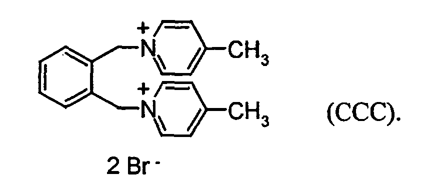
b) 9,0 g dieses Produkts wurden in 20 g Eisessig eingetragen. 20 ml Piperidin tropften unter Kühlung dazu. Schließlich wurden 7,1 g 4-Diethylaminobenzaldehyd eingestreut. Die Mischung wurde 2 h bei 80°C gerührt, abgekühlt und auf 350 ml Wasser ausgetragen. Nach 2 h Rühren bei Raumtemperatur wurde abgesaugt, mit 50 ml Wasser gewaschen und bei 50°C im Vakuum getrocknet. Man erhielt 11,5 g (75 % d. Th.) tiefrotes Pulvers des Farbstoffs der Formel 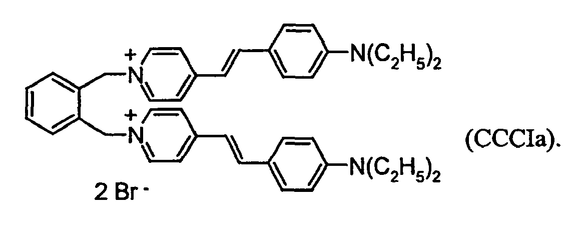 ¹H-NMR ([D₆]-DMSO): δ = 1,12 (t), 3,42 (q), 5.96 (s), 6,73 (d), 7,16 (d), 7,27 (m), 7,53 (m), 7,56 (d), 7,96 (d), 8,08 (d), 8,74 (d).
c) 7,7 g dieses Bromids wurden in 170 ml Methanol gelöst. In der Siedehitze wurden 13,2 g Tetrabutylammoniumtetrafluoroborat zugesetzt. Nach 15 min Kochen wurde abgekühlt, abgesaugt, mit 3 x 10 ml Methanol gewaschen und bei 40°C im Vakuum getrocknet. Man erhielt 5,8 g (74 % d. Th.) tiefrotes, blau glänzendes Pulver der Formel

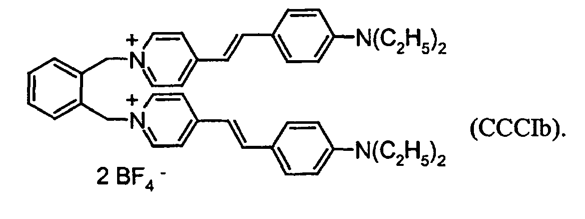

### Beispiel 2

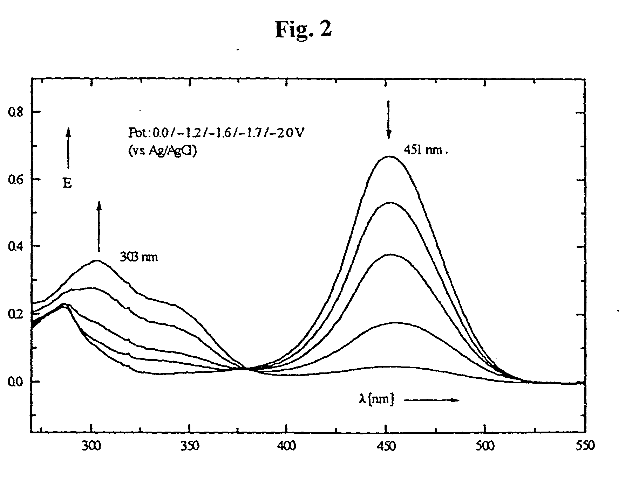

a) Eine Mischung von 3,44 g Butan-1,1,4,4-tetracarbonsäure-tetraethylester und 6,25 g 2-Mercaptoanilin wurden in 100 ml Polyphosphorsäure 2 h auf 80 bis 90°C, 3 h auf 120°C und schließlich 1 h auf 140°C erhitzt. Das Gemisch wurde auf 80°C abgekühlt und in 200 ml gekühltes Wasser eingerührt. Der Niederschlag wurde abfiltriert und mit halbgesättigter Kaliumcarbonat-Lösung gewaschen. Anschließend wurde der Rückstand aus Dimethylsulfoxid umkristallisiert und das kristalline Produkt mit Ethanol gewaschen. Man erhielt 1,71 g (29 % d. Th.) eines hellgelben kristallinen Feststoffs der Formel 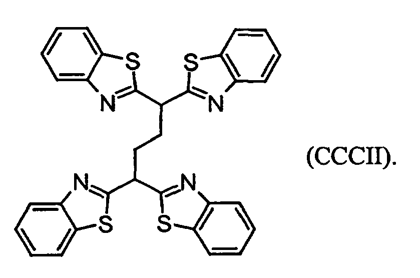 Schmp. 248-250 °C.
   ¹H-NMR (CDCl₃): δ = 2,70 (m), 5,09 (m), 7,33-7,46 (m), 7,79-8,00 (m).
b) 400 mg dieser Substanz wurden in 8 ml Dichlormethan suspendiert und bei 0°C mit 460 mg Trimethlyoxonium-tetrafluoroborat versetzt. Es wurde 12 h bei Raumtemperatur gerührt. 180 mg Ethyldi(isopropyl)amin wurden zugetropft und für weitere 36 h gerührt. Der Niederschlag wurde abfiltriert und aus Acetonitril umkristallisiert. Man erhielt 490 mg (89 % d. Th.) eines orangefarbenen Feststoffs der Formel 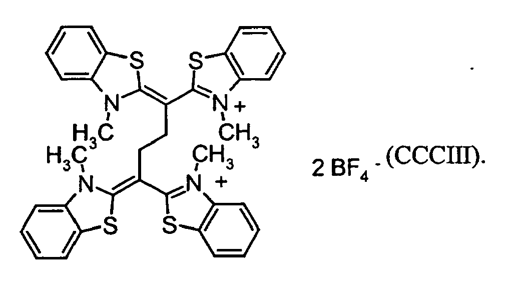 ¹H-NMR (CD₃CN): δ = 3,22 (s), 3,29 (s), 7,51-7,95 (m).
   Spektroelektrochemie (Reduktion): Fig. 2.

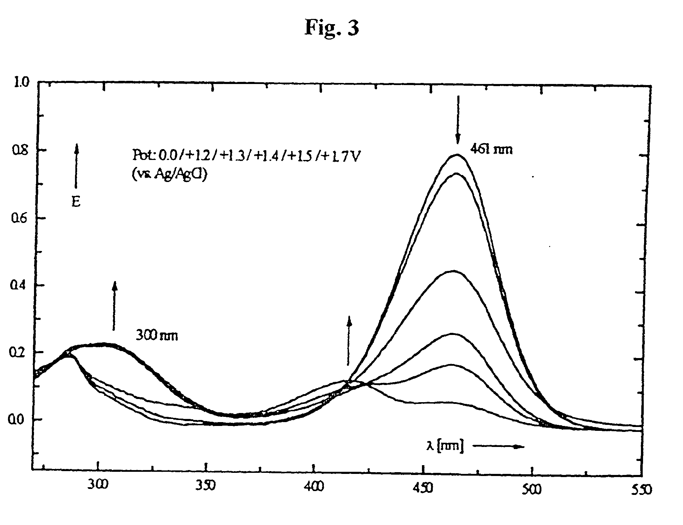

In analoger Weise können auch elektrochemische Verbindungen hergestellt werden, die statt der -CH₂-CH₂-Brücke eine -(CH₂)₃- oder -(CH₂)₄-Brücke enthalten, z. B. 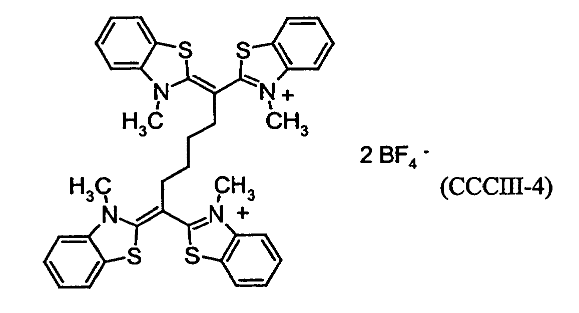 Spektroelektrochemie (Oxidation) von (CCCIII-4): Fig. 3.

### Beispiel 3

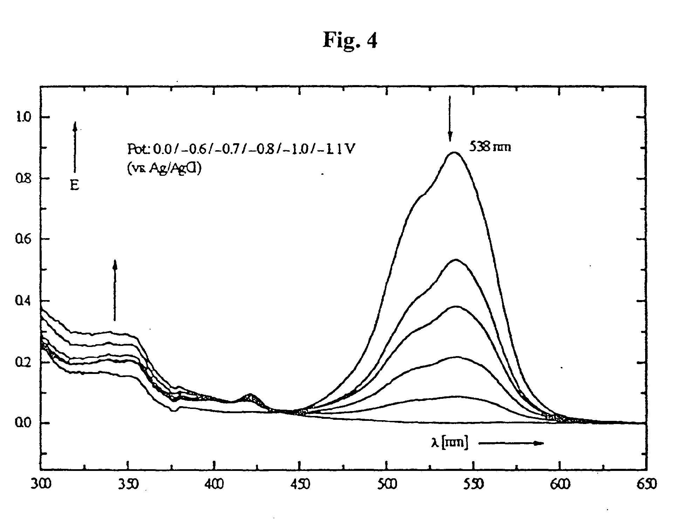

a) Eine Suspension von 2,75 g 2,3-Dimethylbenzthiazolium-methosulfat in 15 ml wasserfreiem Pyridin wurde auf 0°C gekühlt und mit 0,91 g Adipinsäuredichlorid tropfenweise versetzt. Das Gemisch wurde 30 min bei 0°C gerührt und anschließend 15 min auf 80°C erhitzt. Zu der heißen Lösung wurden 15 ml Methanol gegeben. Der Niederschlag wurde abfiltriert und aus Pyridin-Methanol umkristallisiert. Man erhielt 1,12 g (46 % d. Th.) farblose Nadeln der Formel 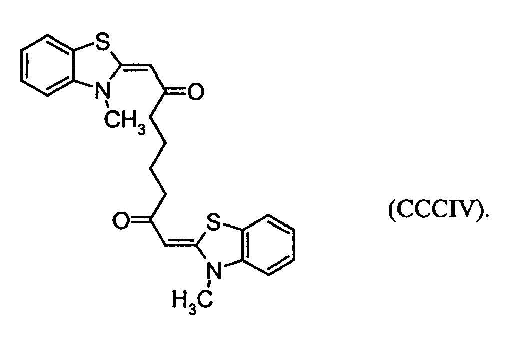 Schmp. 218 °C.
b) 440 mg Trimethyloxonium-tetrafluoroborat wurden in 5 ml Dichlormethan gelöst und bei Raumtemperatur mit 436 mg der Verbindung aus a) versetzt. Einige Tropfen Ethyldi(isopropyl)amin wurden zugesetzt. Nach 60 min Rühren bei Raumtemperatur wurde die Suspension abgesaugt. Man erhielt 600 mg (94 % d. Th.) eines farblosen kristallinen Feststoffs der Formel 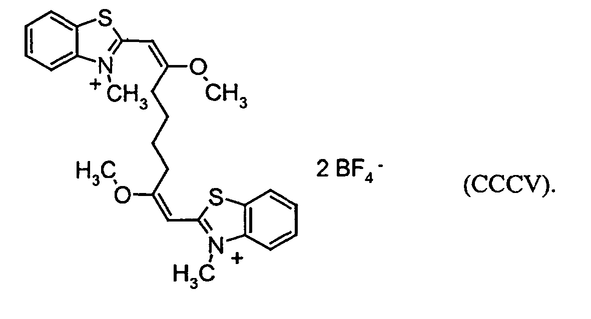 Schmp. 235-237 °C.
c) 1,5 g der Verbindung aus b) wurden in 60 ml Methanol suspendiert, auf 40°C erwärmt und mit 2,20 g der Verbindung der Formel 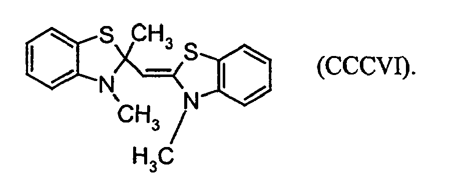 versetzt. Man erhitzte das Reaktionsgemisch 3 h unter Rückfluss. Nach Abkühlen auf Raumtemperatur wurde der ausgefallene Feststoff abfiltriert. Extraktion mit Isopropanol lieferte 668 mg eines roten Nebenprodukts und als Rückstand 465 mg (23 % d. Th.) eines grün-metallisch glänzenden kristallinen Feststoffs der Formel 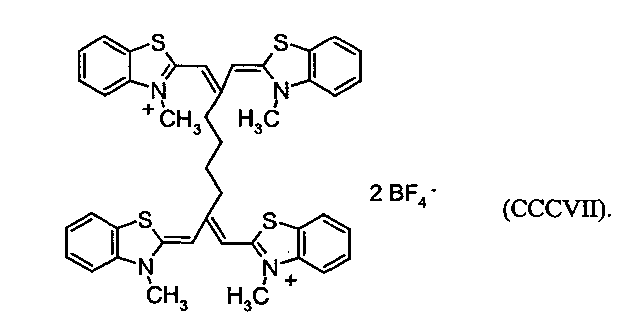 Schmp. 295-296 °C.
   ¹H-NMR ([D₆]-DMSO): δ = 2,00 (m), 3,03 (m), 3,92 (s), 6,47 (s), 7,34 bis 7,90 (m).
   Spektroelektrochemie (Reduktion): Fig. 4.

### Beispiel 4

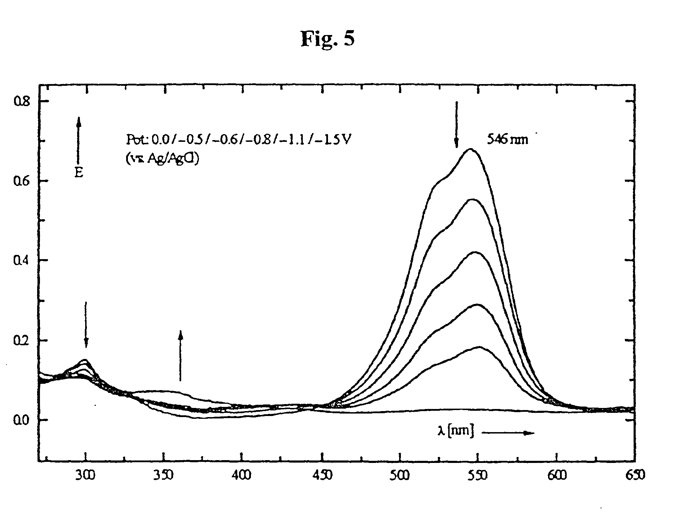

a) 5,22 g Korksäure wurden in 45 ml Tetrahydrofuran gelöst, mit 6,24 g N-Methylmorpholin versetzt und unter Rühren auf -20°C abgekühlt. Es wurden 8,82 g Chlorameisensäureisobutylester und nach 15 min 8,97 g o-Methylaminothiophenol zugegeben. Nach 5 min wurde das Kältebad entfernt und die hellgelbe Suspension 45 min gerührt. Anschließend wurde eine Lösung von 25,0 g Ammonium-hexafluorophosphat in 50 ml konz. Salzsäure zugetropft. Der auftretende farblose Niederschlag wurde mit Eiswasser und Ether gewaschen und im Vakuum getrocknet. Umkristallisation aus Acetonitril lieferte 17,7 g (88 % d. Th.) farblose Kristalle der Formel 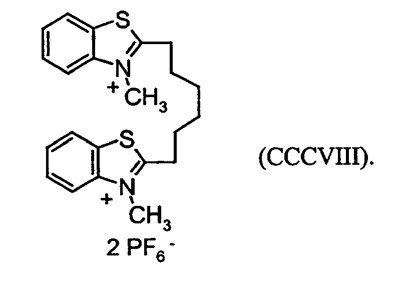 Schmp. 252-256 °C.
b) 0,50 g der Verbindung der Formel 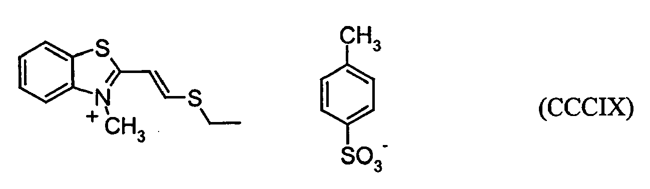 und 0,32 g der Verbindung aus a) wurden in 20 ml Pyridin gelöst und 30 min zum Rückfluss erhitzt. Nach Abkühlen wurde der sich bildende blaue kristalline Niederschlag abfiltriert und aus Acetonitril umkristallisiert. Man erhielt 240 mg (48 % d. Th.) eines blau-metallisch glänzenden Feststoffs der Formel 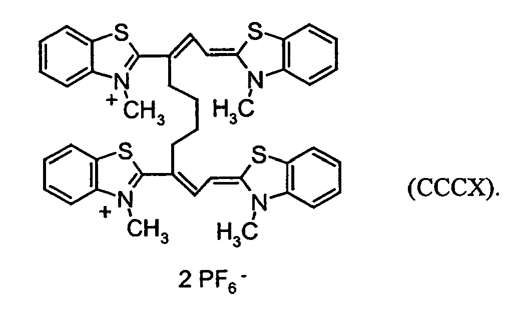 Schmp. 284-285 °C.
   ¹H-NMR ([D₆]-DMSO): δ = 1,77 (m), 2,79 (m), 3,74 (s), 4,09 (s), 6,17 (d), 7,07-8,06 (m).
   Spektroelektrochemie (Reduktion): Fig. 5.

### Beispiel 5

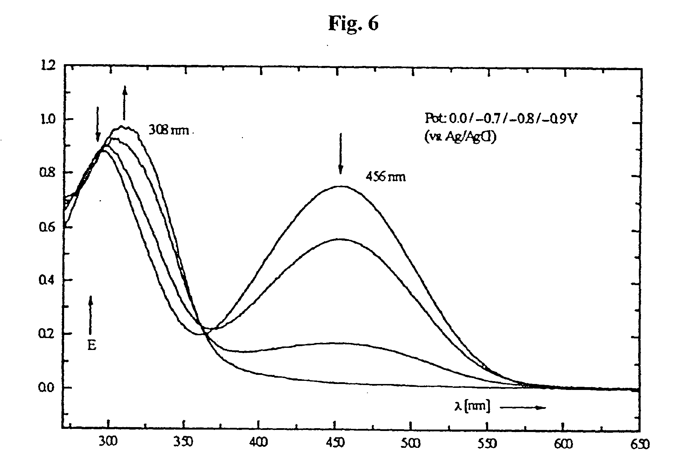

0,50 g der Verbindung der Formel (CCCVIII) aus Beispiel 4a und 0,24 g 4-Dimethylaminobenzaldehyd wurden in 10 ml Acetanhydrid suspendiert und 30 min zum Rückfluss erhitzt. Anschließend wurde das Reaktionsgemisch in eine heiße Lösung von 0,65 g Ammonium-tetrafluoroborat in 30 ml Wasser getropft. Der sich bildende Niederschlag wurde abgesaugt und aus Acetonitril umkristallisiert. Man erhielt 0,53 g (76 % d. Th.) eines metallisch glänzenden roten Feststoffs der Formel 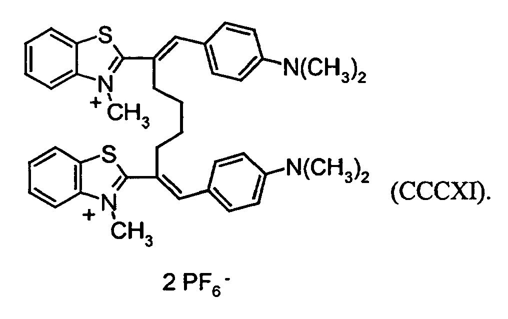 Schmp. 158°C.
¹H-NMR ([D₆]-DMSO): δ = 1,72 (m), 2,95 (m), 3,00 (s), 4,23 (s), 7,24 (s), 6,75-8,41 (m).
Spektroelektrochemie (Reduktion): Fig. 6.

### Beispiel 6

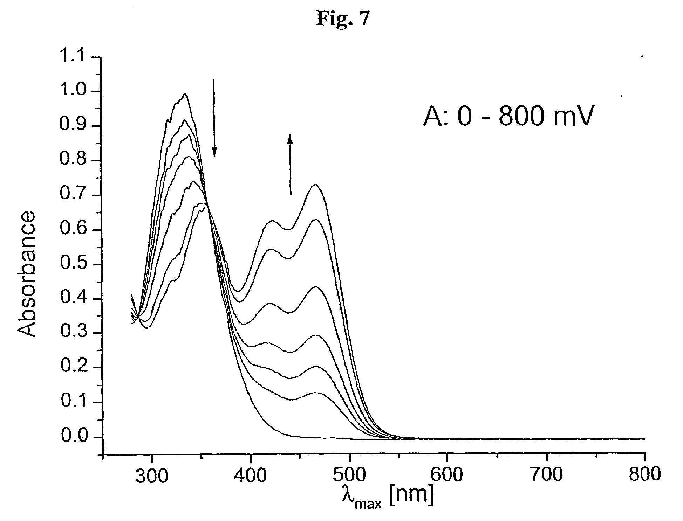

a) Eine Lösung von 2,0 g Michler's Keton und 1,2 g Thionylchlorid in 30 ml Toluol wurde 3 h bei 20 bis 25°C gerührt. Dann wurde der Feststoff abfiltriert, mit 20 ml Toluol digeriert, erneut filtriert und im Vakuum getrocknet. Man erhielt 1,9 g (80 % d. Th.) tiefblaue Kristalle der Formel 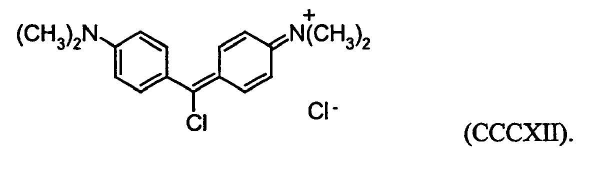
b) Man tropfte bei 20 - 25°C zu einer Lösung von 349 mg der Verbindung der Formel (CCCXII) (aus a)) und 275 mg Triethylamin in 20 ml Dichlormethan eine Lösung von 100 mg 2,2'-Diaminobiphenyl in 2 ml Dichlormethan. Die Reaktionsmischung wurde mit 2 x 10 ml gesättigter, wässriger Natriumhydrogencarbonatlösung und 10 ml gesättigter, wässriger Natriumchloridlösung gewaschen und mit Natriumsulfat getrocknet. Das Lösungsmittel wurde im Vakuum abdestilliert. Man erhielt 320 mg rotes Öl. Dieses wurde über Nacht mit 10 ml Ethylacetat/Hexan (1:4) bei 20 - 25°C digeriert, wobei ein orangefarbenes Pulver ausfiel. Die überstehende Lösung wurde abpipettiert. Der Rückstand wurde in gleicher Weise 3 x mit je 10 ml Diethylether digeriert und jedesmal die überstehende Lösung abpipettiert. Schließlich wurde der Feststoff bei 50°C im Vakuum von 5x10⁻² Tor getrocknet. Man erhielt 230 mg (65 % d. Th.) orangefarbenes Pulver der Formel 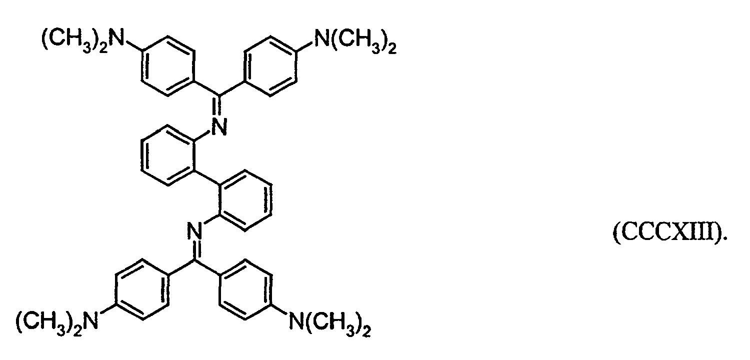 Schmp. 254-256 °C.
   ¹H-NMR(600 MHz, CDCl₃): δ = 2,86, 2,97 (je s), 6,29, 6,63, 6,77, 7,70 (je d), 6,65, 6,72, 6,95 (je m).
   Spektroelektrochemie (Oxidation): Fig. 7.

### Beispiel 7

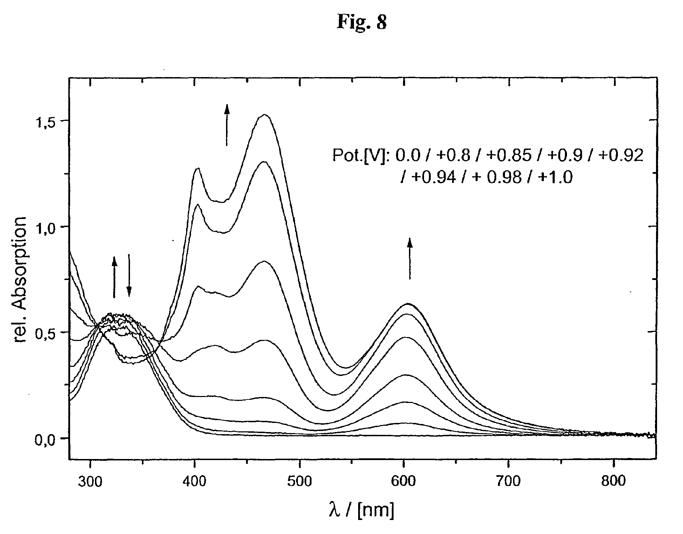

0,8 g Michler's Ketonhydrazon und 0,2 g 1,5-Cyclooctandion wurden in 10 ml Dichlormethan in Gegenwart von 10 ml Eisessig und 50 mg Molekularsieb (4 µm) 2 h bei 20 - 25°C gerührt. Das Molekularsieb wurde abfiltriert. Die Lösung wurde rasch mit 10 ml gesättigter, wässriger Natriumhydrogencarbonatlösung und 10 ml gesättiger, wässriger Natriumchloridlösung gewaschen und mit Natriumsulfat getrocknet. Nach Abdestiliieren des Lösungsmittel nahm man das zurückgebliebene stark viskose Öl in 1 ml Ethylacetat auf, tropfte unter Rühren 10 - 20 ml Petrolether (30 - 50°C) dazu, rührte über Nacht bei 20 - 25°C, filtrierte den Feststoff ab, wusch ihn mit 10 ml Petrolether (30 - 50°C) und trocknete ihn bei 50°C im Vakuum von 6.67 Pa (5x10⁻² Torr). Man erhielt 0,7 g (73 % d. Th.) eines blassgelben Pulvers der Formel 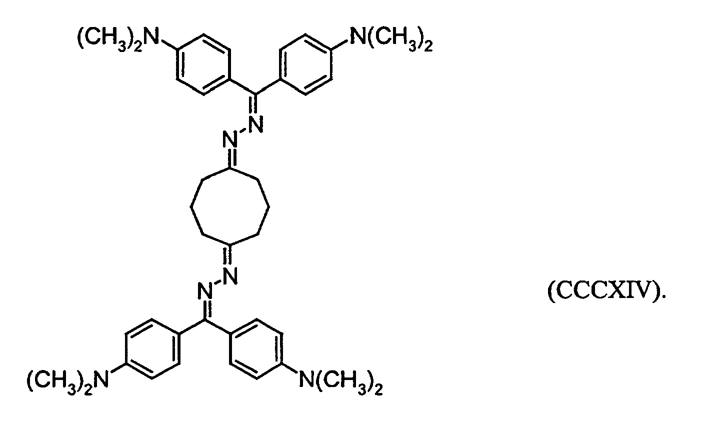 Schmp. 209 - 210 °C.
¹H-NMR (CDCl₃): δ = 2,05, 2,44, 2,46 (je m), 2,89, 2,96, 2,97, 3,00 (je s), 6,63, 7,22, 7,54, 7,64 (je m).
Spektroelektrochemie (Oxidation): Fig. 8.

### Beispiel 8

Gemäß Fig. 1 wurde eine Zelle aufgebaut. Es wurden hierzu zwei Glasplatten 1 und 2 benutzt, die auf einer Fläche mit ITO beschichtet sind.

Eine Mischung aus 97 % photohärtendem Epoxikleber DELO-Katiobond^{®} 4594 (DELO Industrieklebstoffe, Landsberg) und 3 % Glaskugeln mit 200 µm Durchmesser wurde ringförmig 3 auf die mit ITO-beschichtete Seite der Glasplatte 1 so aufgetragen, dass eine 2 mm breite Öffnung 4 ausgespart wurde. Nun wurde die Glasplatte 2 so auf die Kleberaupe gelegt, dass die ITO-Schichten der beiden Platten 1 und 2 einander zugewandt waren und eine Geometrie entstand, wie in Fig. 1 gezeigt. Die Aushärtung des Klebers erfolgte durch 10-minütiges Belichten mit Tageslicht in der Nähe eines Fensters und anschließend für 20 min bei 105°C ohne Belichtung.

Eine Schale wurde unter Stickstoffatmosphäre mit einer Lösung gefüllt, die 0,002 molar an der elektrochemischen Verbindung der Formel (CCCIb) des Beispiels 1 und 0,004 molar an der elektrochromen Verbindung der Formel 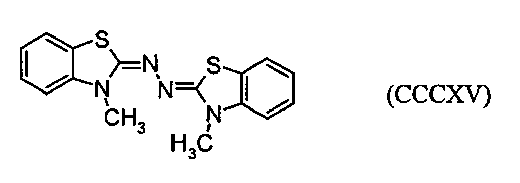 und jeweils 0,1 molar an den UV-Absorbern der Formeln 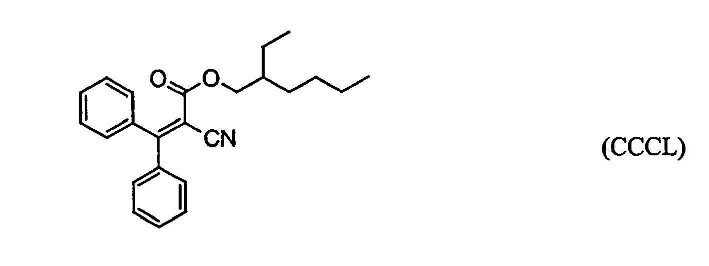 und 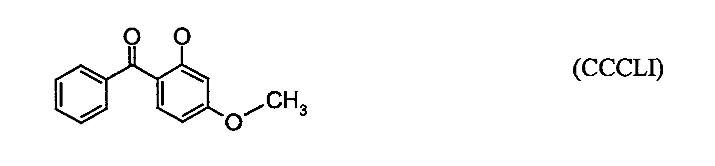 in wasserfreiem, sauerstofffreiem Propylencarbonat war.

Dann wurde die Zelle unter Stickstoffatmosphäre senkrecht so in die Schale gestellt, dass die Öffnung 4 sich unterhalb des Flüssigkeitsspiegels befand. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung durch die Öffnung 4 in die Zelle hinein und füllte bis auf eine kleine Blase das gesamte Volumen aus. Die Zelle wurde aus der Lösung entnommen, unter Stickstoffatmoshäre an der Öffnung 4 gereinigt, indem sie mit einem Papiertuch abgeputzt wurde, und mit dem photochemisch härtbaren Acrylatkleber DELO-Photobond^{®} 4497 (DELO Industrieklebstoffe, Landsberg) verschlossen. Anschließend wurde 1 min unter Stickstoffatmosphäre mit der Lampe DELOLUX^{®} 03 (DELO Industrieklebstoffe, Landsberg) die sich in einem Abstand von 8 cm zur Öffnung 4 befand, belichtet und bei Raumtemperatur über Nacht unter Stickstoffatmosphäre ausgehärtet.

Die Zelle war brillant rot gefärbt (λₘₐₓ = 502 nm, Extinktion = 2,2). Durch Anlegen einer Spannung von 1,6 V an die beiden Platten 1 und 2 färbte sich die Zelle rasch schmutzig rot (λₘₐₓ = 410 nm; 502 nm, Extinktion = 1,8; 650 nm; 735 nm). Durch Abschalten der Spannung und Kurzschließen der Kontakte bildete sich die brillantrote Färbung wieder rasch zurück. 5 000 solcher Schaltzyklen wurden ohne Veränderung des Schaltverhaltens überstanden.

### Beispiel 9

Es wurde eine Zelle gebaut wie in Beispiel 8, jedoch wurde die elektrochrome Verbindung der Formel (CCCXV) durch Ferrocen der Formel 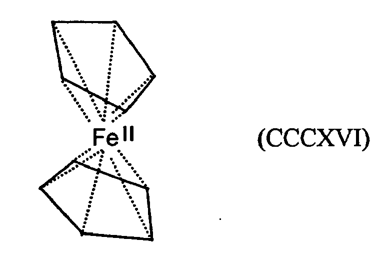 ersetzt. Die Zelle zeigte ebenfalls eine brillantrote Färbung (λₘₐₓ = 502 nm, Extinktion = 2,2). Durch Anlegen einer Spannung von 1,4 V an die beiden Platten 1 und 2 wurde die Färbung der Zelle schwächer rot (λₘₐₓ = 502 nm, Extinktion = 1,75).

### Beispiele 10-17

Analog zu den Beispielen 8 und 9 wurden Zellen hergestellt, die statt der elektrochemischen Verbindung der Formel (CCCIb) andere erfindungsgemäße elektrochemische Verbindungen und eine jeweils dazu passende, reduzierbare oder oxidierbare 2. elektrochrome Verbindung enthielten. Man erhielt folgende Zellen:

| Beispiel | elektrochemische Verbindung | 2. elektrochrome Verbindung | Farbe | Spannung |
|---|---|---|---|---|
| 10 | (CCCIII) | (CCCXVI) | zitronengelb →heller gelb | 2 V |
| 11 | (CCCVII) | (CCCXVI) | rot → heller rot | 1,5 V |
| 12 | (CCCIII) | 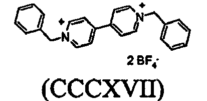 | zitronengelb → gelbstichig grün | 1,5 V |
| 13 | (CCCX) | (CCCXV) | blau → grün | 1,5 V |
| 14 | (CCCXI) | (CCCXVI) | brillantorange → blass orange | 1,3 V |
| 15 | (CCCXIII) | 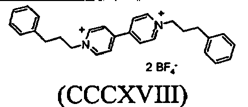 | orangegelb → olivgrün | 1,7 V |
| 16 | (CCCXIV) | (CCCXVIII) | blass gelb →grün | 1,2 V |
| 17 | 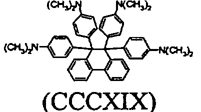 | (CCCXVII) | farblos → blau | 1,6 V |

### Erläuterung der Abbildungen:

Fig. 1: Skizze einer Zelle gemäß Beispiel 8
Fig. 2 - 8: Spektroelektrochemische Untersuchungen (s. J. Salbeck, J. Electroanal. Chem. **1992**, *340*, 169):
   Elektrochemische Apparatur: polierte Platinscheibenelektrode (∅ 6 mm) als Arbeitselektrode, Platingegenelektrode und Silberdraht als Referenzelektrode; Lösungsmittel Acetonitril oder Methylenchlorid, Tetrabutylammoniumhexafluorophosphat als Leitsalz (0,1 molar).
   Spektroskopische Messung: Messung in Reflexion an der Platinscheibenelektrode mit Hilfe eines Lichtleiters mit dem UV-Spektrometer Lambda 19 von Perkin-Elmer.
   Der Pfeil zeigt an, ob die Absorption zu- oder abnimmt, wenn die angelegte Spannung ausgehend von 0 V in der in der Abbildung angegebenen Weise verändert wird.

## Patentansprüche

1. Elektrochrome Vorrichtung, enthaltend zwei Platten oder Folien, von denen wenigstens eine transparent ist und die auf den einander zugewandten Seiten mit einer leitfähigen Schicht versehen sind, wobei wenigstens eine der leitfähigen Schichten transparent ist, wobei durch die Platten oder Folien und einen Dichtungsring ein Volumen definiert ist, in dem sich ein elektrochromes Medium befindet, das mindestens eine reduzierbare Verbindung OX₂ und mindestens eine oxidierbare Verbindung RED₁ enthält, die durch Elektronenaufnahme an der Kathode bzw. durch Elektronenabgabe an der Anode in ihre jeweiligen Redoxzustände RED₂ und OX₁ übergehen, wobei nach Ladungsausgleich zwischen RED₂ und OX₁ jeweils wieder die ursprünglichen Redoxzustände OX₂ und RED₁ zurückgebildet werden, **dadurch gekennzeichnet, dass** mindestens ein RED₁ oder ein OX₂ eine elektrochrome Verbindung ist, in der zwei gleiche oder verschiedene farbgebende Einheiten über mindestens eine Brücke so verbunden sind, dass bei Oxidation bzw. Reduktion zwischen den beiden Einheiten eine σ-Bindung gebildet oder gebrochen wird unter Farbwechsel der betreffenden Verbindung.

2. Elektrochrome Vorrichtung gemäß Anspruch 1, **dadurch gekennzeichnet, dass** die beiden Redoxzustände der elektrochromen Verbindung RED₁ bzw. OX₂, die durch Bildung oder Bruch einer σ-Bindung ineinander übergehen, Absorptionsmaxima besitzen, die sich um mindestens 70 nm, vorzugsweise um mindestens 100 nm unterscheiden, wobei wenigstens eines der Absorptionsmaxima im sichtbaren Teil des Spektrums liegt.

3. Elektrochrome Vorrichtung gemäß einem oder beiden der Ansprüche 1 und 2, **dadurch gekennzeichnet, dass** der langwellig absorbierende Redoxzustand entweder bei geöffneter oder bei geschlossener σ-Bindung vorliegt, wobei dieser langwellig absorbierende Redoxzustand sowohl durch Reduktion als auch durch Oxidation erzeugt werden kann.

4. Elektrochrome Vorrichtung gemäß einem oder mehreren der Ansprüche 1 bis 3, **dadurch gekennzeichnet, dass** die beiden Redoxzustände OX₂ und RED₂ bzw. RED₁ und OX₁ der elektrochromen Verbindung einem der folgenden Typen 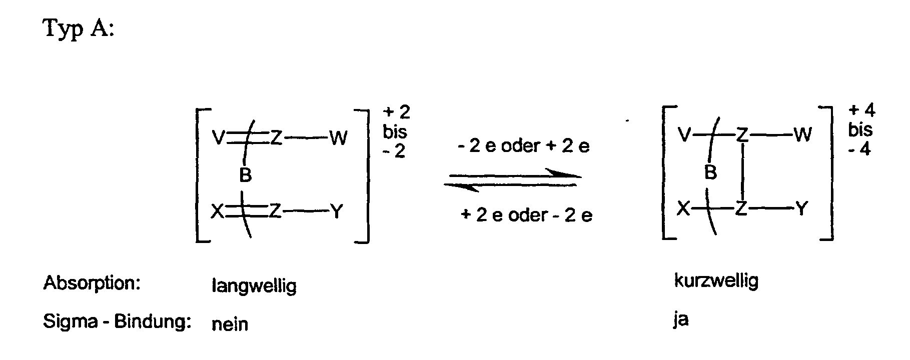 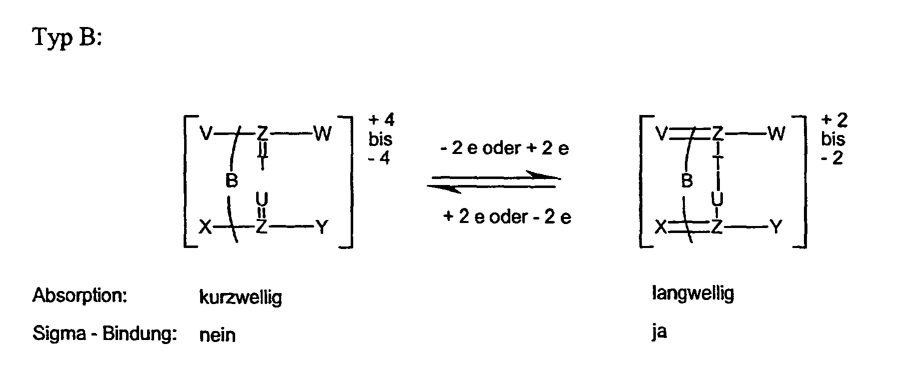 entsprechen,
worin
die langwellig absorbierenden Einheiten V=Z-W und X=Z-Y für Methinfarbstoffe stehen
und
B für eine Brücke steht.

5. Elektrochrome Vorrichtung gemäß einem oder mehreren der Ansprüche 1 bis 4, **dadurch gekennzeichnet, dass** mindestens ein OX₂ der Formel (I) 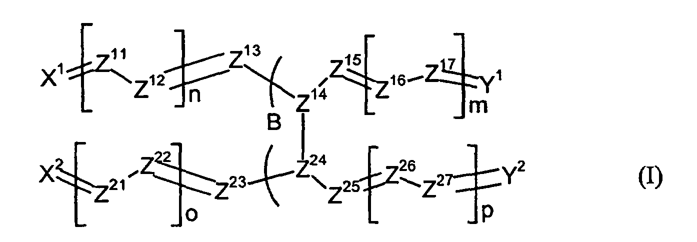 entspricht,
worin
X¹, X², Y¹ und Y² unabhängig voneinander für ein Heteroatom wie N, O, S, Se oder P stehen, das im Falle O, S und Se noch einen Substituenten tragen kann und dann positiv geladen ist und im Falle N und P noch einen oder zwei Substituenten tragen kann und im zweiten Fall positiv geladen ist,
Z¹¹ bis Z¹⁷ und Z²¹ bis Z²⁷ unabhängig voneinander C, das noch einen Substituenten trägt, oder N bedeuten,
B eine Brücke bedeutet, die zwischen einem der Atome der Gruppe X¹, Z¹¹ bis Z¹³, Z¹⁵ bis Z¹⁷ und Y¹ sowie einem der Atome der Gruppe X², Z²¹ bis Z²³, Z²⁵ bis Z²⁷ und Y² ausgebildet ist, und
n, m, o und p unabhängig voneinander eine ganze Zahl von 0 bis 5 bedeuten:

6. Elektrochrome Vorrichtung gemäß einem oder mehreren der Ansprüche 1 bis 4, **dadurch gekennzeichnet, dass** mindestens ein RED₁ der Formel (II) 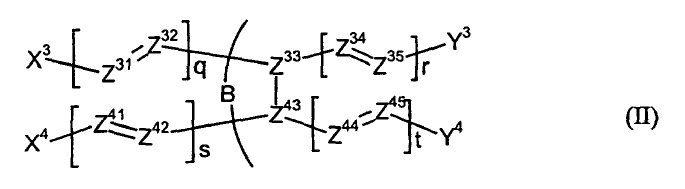 entspricht,
worin
X³, X⁴, Y³ und Y⁴ unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
Z³¹ bis Z³⁵ und Z⁴¹ bis Z⁴⁵ unabhängig voneinander C, das noch einen Substituenten trägt, oder N bedeuten,
B eine Brücke bedeutet, die zwischen einem der Atome der Gruppe X³, Z³¹, Z³², Z³⁴, Z³⁵ und Y³ sowie einem der Atome der Gruppe X⁴, Z⁴¹, Z⁴², Z⁴⁴, Z⁴⁵ und Y⁴ ausgebildet ist, und
q, r, s und t unabhängig voneinander eine ganze Zahl von 0 bis 5 bedeuten.

7. Elektrochrome Vorrichtung gemäß einem oder mehreren der Ansprüche 5 bis 6, **dadurch gekennzeichnet, dass** wenigstens ein Atom X¹, X², Y¹ oder Y² bzw. X³, X⁴, Y³ oder Y⁴ Bestandteil eines heterocyclischen Rings ist.

8. Elektrochrome Vorrichtung gemäß einem oder mehreren der Ansprüche 1 bis 4, **dadurch gekennzeichnet, dass** mindestens ein RED₁ der Formel (III) 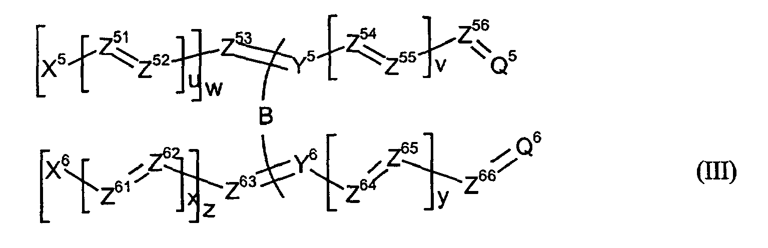 entspricht,
worin
X⁵ und X⁶ unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
Y⁵ und Y⁶ unabhängig voneinander für ein Heteroatom wie N oder P oder für C, das noch einen Substituenten trägt, stehen,
Q⁵ und Q⁶ unabhängig voneinander für eine Heteroatom wie N oder P, die noch einen Substituenten tragen, oder für C stehen, das noch zwei Substituenten trägt,
Z⁵¹, Z⁵², Z⁵⁴ bis Z⁵⁶ und Z⁶¹, Z⁶², Z⁶⁴ bis Z⁶⁶ unabhängig voneinander C, das noch einen Substituenten trägt, oder N bedeuten
Z⁵³ und Z⁶³ C bedeuten, das noch einen Substituenten trägt, wenn w bzw. z 1 bedeuten,
B eine Brücke bedeutet, die zwischen einem der Atome der Gruppe X⁵, Z⁵¹ bis Z⁵⁶ und Q⁵ sowie einem der Atome der Gruppe X⁶, Z⁶¹ bis Z⁶⁶ und Q⁶ ausgebildet ist,
w und z unabhängig voneinander 1 oder 2 bedeuten und
u, v, x und y unabhängig voneinander eine ganze Zahl von 0 bis 5 bedeuten.

9. Elektrochrome Vorrichtung gemäß Anspruch 8, **dadurch gekennzeichnet, dass** die Brücke B zwischen einem der Atome der Gruppe Z⁵⁴ bis Z⁵⁶ und Q⁵ und einem der Atome der Gruppe Z⁶⁴ bis Z⁶⁶ und Q⁶ ausgebildet ist, wobei das entsprechende Atom Z⁵⁴, Z⁵⁵, Z⁵⁶, Z⁶⁴, Z⁶⁵ bzw. Z⁶⁶ C bedeuten muss.

10. Elektrochrome Vorrichtung gemäß einem oder mehreren der Ansprüche 1 bis 9, **dadurch gekennzeichnet, dass** die durch oxidativen oder reduktiven Bindungsbruch bzw. Bindungsbildung entstehenden Methinfarbstoffe einer der folgenden Klassen angehören:
Streptocyanine, Hemicyanine, phenyloge Hemicyanine, Cyanine, Oxonole, Betaine, Neutromethine, Phenazine, Oxazine, Thiazine, Bisazine, ggf. verbrückte Diphenylmethane, ggf. verbrückte Triphenylmethane, (Mono - oder Di-)phenyl-(mono- oder di-)heteroarylmethane, Triheteroarylmethane, Acridine, Xanthene, Thioxanthene.

11. Elektrochrome Vorrichtung gemäß einem oder mehreren der Ansprüche 5 bis 9, **dadurch gekennzeichnet, dass** in Formel (I) und/oder (II) und/oder (III) jeweils die Paare X¹ und X², X³ und X⁴, X⁵ und X⁶, Y¹ und Y², Y³ und Y⁴, Y⁵ und Y⁶, Z¹¹ und Z²¹, Z¹² und Z²², Z¹³ und Z²³, Z¹⁴ und Z²⁴, Z¹⁵ und Z²⁵, Z¹⁶ und Z²⁶, Z¹⁷ und Z²⁷, Z³¹ und Z⁴¹, Z³² und Z⁴², Z³³ und Z⁴³, Z³⁴ und Z⁴⁴, Z³⁵ und Z⁴⁵, Z⁵¹ und Z⁶¹, Z⁵² und Z⁶², Z⁵³ und Z⁶³, Z⁵⁴ und Z⁶⁴, Z⁵⁵ und Z⁶⁵, Z⁵⁶ und Z⁶⁶, Q⁵ und Q⁶, n und o, m und p, q und s, r und t, u und x, v und y, w und z gleich sind.

12. Elektrochrome Verbindung, in der zwei gleiche oder verschiedene farbgebende Einheiten über mindestens eine Brücke so verbunden sind, dass bei Oxidation bzw. Reduktion zwischen den beiden Einheiten eine σ-Bindung gebildet oder gebrochen wird unter Farbwechsel der betreffenden Verbindung.

13. Elektrochrome Verbindung RED₁ bzw. OX₂ gemäß Anspruch 12, deren beide Redoxzustände, die durch Bildung oder Bruch einer σ-Bindung ineinander übergehen, Absorptionsmaxima besitzen, die sich um mindestens 70 nm, vorzugsweise um mindestens 100 nm unterscheiden, wobei wenigstens eines der Absorptionsmaxima im sichtbaren Teil des Spektrums liegt.

14. Elektrochrome Verbindung RED₁ bzw. OX₂ gemäß einem oder beiden der Ansprüche 12 und 13, bei der der langwellig absorbierende Redoxzustand entweder bei geöffneter oder bei geschlossener σ-Bindung vorliegt, wobei dieser langwellig absorbierende Redoxzustand sowohl durch Reduktion als auch durch Oxidation erzeugt werden kann.

15. Elektrochrome Verbindung gemäß einem oder mehreren der Ansprüche 12 bis 14, **dadurch gekennzeichnet, dass** sie einem der Redoxzustände der folgenden Typen 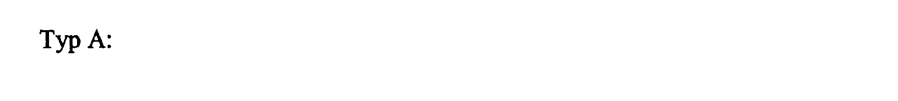 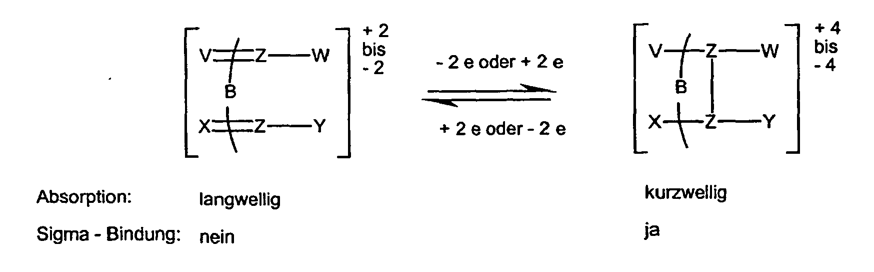 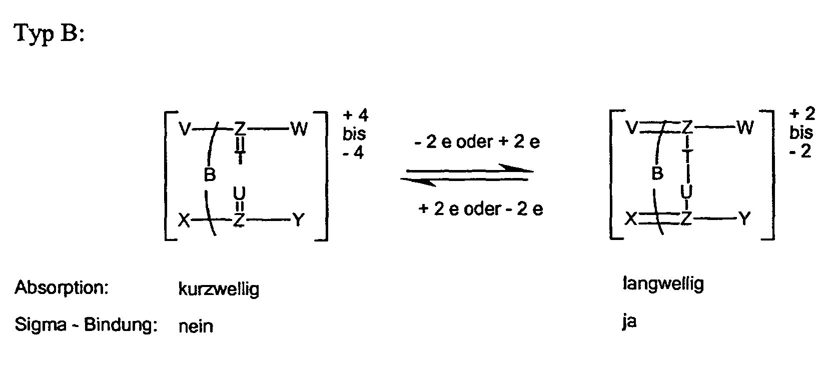 entspricht,
worin
die langwellig absorbierenden Einheiten V=Z-W und X=Z-Y für Methinfarbstoffe stehen
und
B für eine Brücke steht.

16. Elektrochrome Verbindung gemäß einem oder mehreren der Ansprüche 12 bis 15, **dadurch gekennzeichnet, dass** sie der Formel (I) 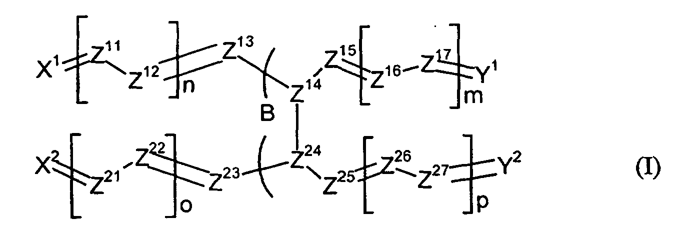 entspricht,
worin
X¹, X², Y¹ und Y² unabhängig voneinander für ein Heteroatom wie N, O, S, Se oder P stehen, das im Falle O, S und Se noch einen Substituenten tragen kann und dann positiv geladen ist und im Falle N und P noch ein oder zwei Substituenten tragen kann und im zweiten Fall positiv geladen ist,
Z¹¹ bis Z¹⁷ und Z²¹ bis Z²⁷ unabhängig voneinander C, das noch einen Substituenten trägt, oder N bedeuten,
B eine Brücke bedeutet, die zwischen einem der Atome der Gruppe X¹, Z¹¹ bis Z¹³, Z¹⁵ bis Z¹⁷ und Y¹ sowie einem der Atome der Gruppe X², Z²¹ bis Z²³, Z²⁵ bis Z²⁷ und Y² ausgebildet ist, und
n, m, o und p unabhängig voneinander eine ganze Zahl von 0 bis 5 bedeuten.

17. Elektrochrome Verbindung gemäß einem oder mehreren der Ansprüche 12 bis 15, **dadurch gekennzeichnet, dass** sie der Formel (II) 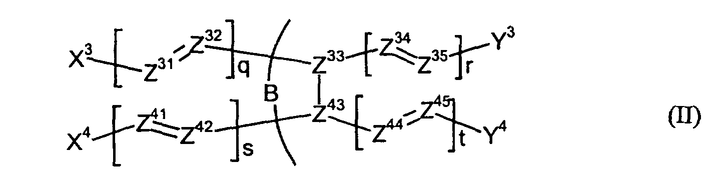 entspricht,
worin
X³, X⁴, Y³ und Y⁴ unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
Z³¹ bis Z³⁵ und Z⁴¹ bis Z⁴⁵ unabhängig voneinander C, das noch einen Substituenten trägt, oder N bedeuten,
B eine Brücke bedeutet, die zwischen einem der Atome der Gruppe X³, Z³¹, Z³², Z³⁴, Z³⁵ und Y³ sowie einem der Atome der Gruppe X⁴, Z⁴¹, Z⁴², Z⁴⁴, Z⁴⁵ und Y⁴ ausgebildet ist, und
q, r, s und t unabhängig voneinander eine ganze Zahl von 0 bis 5 bedeuten,
unter der Einschränkung, dass nicht gleichzeitig
X³, X⁴, Y³ und Y⁴ Dimethylamino oder Methoxy oder X³-X⁴ und/oder Y³-Y⁴ für eine Brücke der Formel -O- stehen,
(Z³¹=Z³²)_{q}, (Z⁴¹=Z⁴²)ₛ, (Z³⁴=Z³⁵)ᵣ und (Z⁴⁴=Z⁴⁵)ₜ o- oder p-Phenylen,
Z³³-Z⁴³ einen tetravalenten Rest der Formel 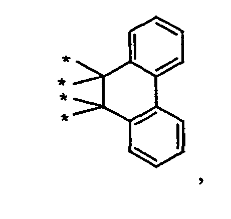
in dem die gesternten (*) Bindungen für die Anknüpfungsstellen stehen,
bedeuten.

18. Elektrochrome Verbindung gemäß einem oder mehreren der Ansprüche 12 bis 15, **dadurch gekennzeichnet, dass** sie der Formel (III) 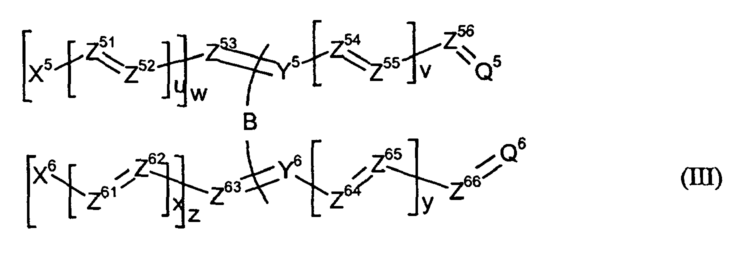 entspricht,
worin
X⁵ und X⁶ unabhängig voneinander für ein Heteroatom wie N, O, S, Se oder P stehen, das im Falle O, S und Se noch einen Substituenten oder eine negative Ladung trägt und im Falle N und P noch zwei Substituenten trägt,
Y⁵ und Y⁶ unabhängig voneinander für ein Heteroatom wie N oder P oder für C, das noch einen Substituenten trägt, stehen,
Q⁵ und Q⁶ unabhängig voneinander für eine Heteroatom wie N oder P, die noch einen Substituenten tragen, oder für C stehen, das noch zwei Substituenten trägt,
Z⁵¹, Z⁵², Z⁵⁴ bis Z⁵⁶ und Z⁶¹, Z⁶², Z⁶⁴ bis Z⁶⁶ unabhängig voneinander C, das noch einen Substituenten trägt, oder N bedeuten
Z⁵³ und Z⁶³ C bedeuten, das noch einen Substituenten trägt, wenn w bzw. z 1 bedeuten,
B eine Brücke bedeutet, die zwischen einem der Atome der Gruppe X⁵, Z⁵¹ bis Z⁵⁶ und Q⁵ sowie einem der Atome der Gruppe X⁶, Z⁶¹ bis Z⁶⁶ und Q⁶ ausgebildet ist,
w und z unabhängig voneinander 1 oder 2 bedeuten und
u, v, x und y unabhängig voneinander eine ganze Zahl von 0 bis 5 bedeuten.

19. Elektrochrome Verbindung gemäß einem der Ansprüche 16 bis 18, **dadurch gekennzeichnet, dass** die Brücke B, die von den Substituenten zweier Atome der Gruppen X, Y, Z oder Q gebildet wird, zur Ausbildung eines Sechsrings führt.

20. Elektrochromes Medium, das mindestens eine elektrochrome Verbindung der Typen A und/oder B, vorzugsweise der Formeln (I), (II) und/oder (III) enthält,
wobei die Reste die in den Ansprüchen 4 bis 9 angegebenen Bedeutungen besitzen.

21. Verwendung der elektrochromen Vorrichtung gemäß einem oder mehreren der Ansprüche 1 bis 11 als Fenster oder Trennscheibe oder Sichtschutzscheibe oder Verglasung oder Dachverglasung oder Lichtfilter oder Spiegel oder Anzeigevorrichtung.

## Claims

1. Electrochromic device comprising two plates or films, of which at least one is transparent and which are provided with a conductive layer on the sides facing one another, where at least one of the conductive layers is transparent, where the plates or films and a sealing ring define a volume in which is located an electrochromic medium comprising at least one reducible compound OX₂ and at least one oxidizable compound RED₁ which convert into their respective redox states RED₂ and OX₁ by taking up electrons at the negative electrode or by releasing electrons at the positive electrode, where, after charge equalization between RED₂ and OX₁, the original redox states OX₂ and RED₁ are in each case re-formed, **characterized in that** at least one RED₁ or OX₂ is an electrochromic compound in which two identical or different colouring units are connected via at least one bridge in such a way that, on oxidation or reduction, a σ-bond is formed or broken between the two units with a colour change of the compound in question.

2. Electrochromic device according to Claim 1, **characterized in that** the two redox states of the electrochromic compound RED₁ and OX₂, which interconvert through the formation or breaking of a σ-bond, have absorption maxima which differ by at least 70 nm, preferably by at least 100 nm, where at least one of the absorption maxima is in the visible part of the spectrum.

3. Electrochromic device according to one or both of Claims 1 and 2, **characterized in that** the redox state which absorbs at long wavelength is present either with the σ-bond open or closed, where this redox state which absorbs at long wavelength can be generated either by reduction or by oxidation.

4. Electrochromic device according to one or more of Claims 1 to 3, **characterized in that** the two redox states OX₂ and RED₂ or RED₁ and OX₁ of the electrochromic compound correspond to one of the following types 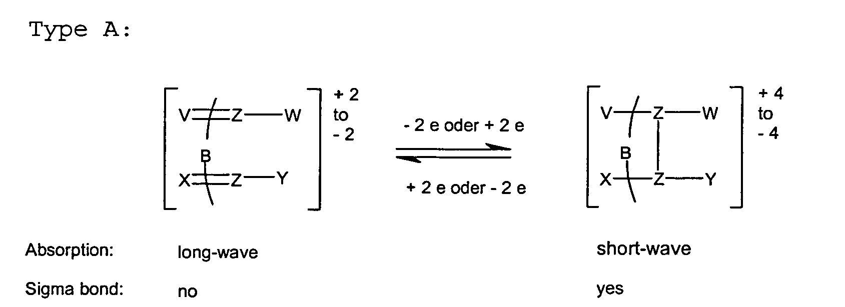 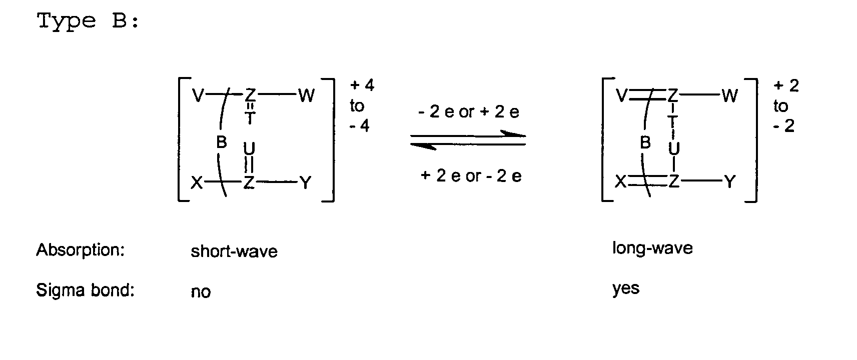 in which
the units V=Z-W and X=Z-Y which absorb at long wavelength represent methine dyes
and
B represents a bridge.

5. Electrochromic device according to one or more of Claims 1 to 4, **characterized in that** at least one OX₂ conforms to the formula (I) 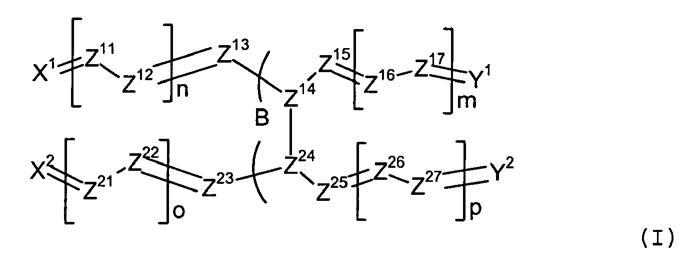 in which
X¹, X², Y¹ and Y², independently of one another, are a hetero atom, such as N, O, S, Se or P, which, in the case of O, S and Se, may also carry a substituent and is then positively charged and in the case of N and P may also carry two substituents and in the second case is positively charged,
Z¹¹ to Z¹⁷ and Z²¹ to Z²⁷, independently of one another, are C, which also carries a substituent, or N,
B is a bridge formed between one of the atoms in the group X¹, Z¹¹ to Z¹³, Z¹⁵ to Z¹⁷ and Y¹, and one of the atoms in group X², Z²¹ to Z²³, Z²⁵ to Z²⁷ and Y², and
n, m, o and p, an integer independently of one another, are from 0 to 5.

6. Electrochromic device according to one or more of Claims 1 to 4, **characterized in that** at least one RED₁ conforms to the formula (II) 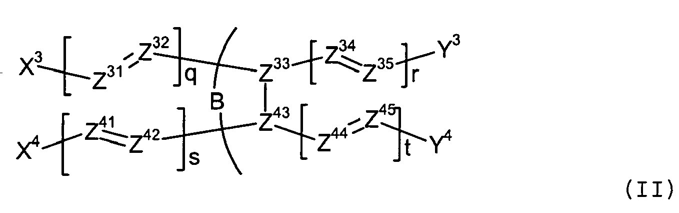 in which
X³, X⁴, Y³ and Y⁴, independently of one another, are a hetero atom, such as N, O, S, Se or P, which, in the case of O, S and Se, also carries a substituent or a negative charge and in the case of N and P also carries two substituents,
Z³¹ to Z³⁵ and Z⁴¹ to Z⁴⁵, independently of one another, are C, which also carries a substituent, or N,
B is a bridge formed between one of the atoms in the group X³, Z³¹, Z³², Z³⁴, Z³⁵ and Y³ and one of the atoms in the group X⁴, Z⁴¹, Z⁴², Z⁴⁴, Z⁴⁵ and Y⁴, and
q, r, s and t, independently of one another, are an integer from 0 to 5.

7. Electrochromic device according to one or more of Claims 5 to 6, **characterized in that** at least one atom X¹, X², Y¹ or Y², or X³, X⁴, Y³ or Y⁴ is a constituent of a heterocyclic ring.

8. Electrochromic device according to one or more of Claims 1 to 4, **characterized in that** at least one RED₁ conforms to the formula (III) 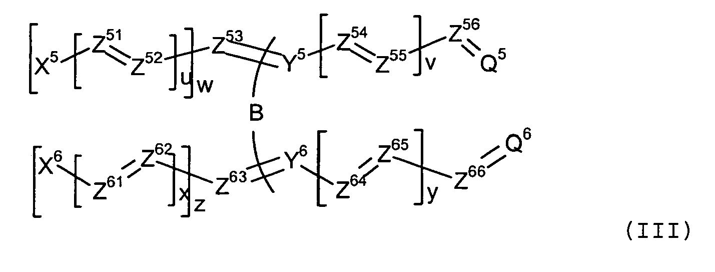 in which
X⁵ and X⁶, independently of one another, are a hetero atom, such as N, O, S, Se or P, which, in the case of O, S and Se, also carries a substituent or a negative charge and in the case of N and P also carries two substituents,
Y⁵ and Y⁶, independently of one another, are a hetero atom, such as N or P, or C, which also carries a substituent,
Q⁵ and Q⁶, independently of one another, are a hetero atom, such as N or P, which also carry a substituent, or C, which also carries two substituents,
Z⁵¹, Z⁵², Z⁵⁴ to Z⁵⁶ and Z⁶¹, Z⁶², Z⁶⁴ to Z⁶⁶, independently of one another, are C, which also carries a substituent, or N,
Z⁵³ to Z⁶³ are C, which also carries a substituent if w or z is 1,
B is a bridge formed between one of the atoms in the group X⁵, Z⁵¹ to Z⁵⁶ and Q⁵ and one of the atoms in the group X⁶, Z⁶¹ to Z⁶⁶ and Q⁶,
w and z, independently of one another, are 1 or 2, and
u, v, x and y, independently of one another, are an integer from 0 to 5.

9. Electrochromic device according to Claim 8, **characterized in that** a bridge B is formed between one of the atoms in the group Z⁵⁴ to Z⁵⁶ and Q⁵ and one of the atoms in the group Z⁶⁴ to Z⁶⁶ and Q⁶, where the corresponding atom Z⁵⁴, Z⁵⁵, Z⁵⁶, Z⁶⁴, Z⁶⁵ or Z⁶⁶ must be C.

10. Electrochromic device according to one or more of Claims 1 to 9, **characterized in that** the methine dyes formed by oxidative or reductive bond breaking or bond formation belong to one of the following classes:
streptocyanines, hemicyanines, phenylogous hemicyanines, cyanines, oxonols, betaines, neutromethines, phenazines, oxazines, thiazines, bisazines, optionally bridged diphenylmethanes, optionally bridged triphenylmethanes, (mono- or di)phenyl(mono- or di)heteroarylmethanes, triheteroarylmethanes, acridines, xanthenes and thioxanthenes.

11. Electrochromic device according to one or more of Claims 5 to 9, **characterized in that**, in the formula (I) and/or (II) and/or (III), in each case the pairs X¹ and X², X³ and X⁴, X⁵ and X⁶, Y¹ and Y², Y³ and Y⁴, Y⁵ and Y⁶, Z¹¹ and Z²¹, Z¹² and Z²², Z¹³ and Z²³, Z¹⁴ and Z²⁴, Z¹⁵ and Z²⁵, Z¹⁶ and Z²⁶, Z¹⁷ and Z²⁷, Z³¹ and Z⁴¹, Z³² and Z⁴², Z³³ and Z⁴³, Z³⁴ and Z⁴⁴, Z³⁵ and Z⁴¹, Z⁵¹ and Z⁶¹, Z⁵² and Z⁶², Z⁵³ and Z⁶³, Z⁵⁴ and Z⁶⁴, Z⁵⁵ and Z⁶⁵, Z⁵⁶ and Z⁶⁶, Q⁵ and Q⁶, n and o, m and p, q and s, r and t, u and x, v and y, w and z, are identical.

12. Electrochromic compound in which two identical or different colouring units are linked via at least one bridge in such a way that, on oxidation or reduction, a σ-bond is formed or broken between the two units, with a colour change of the compound in question.

13. Electrochromic compound RED₁ or OX₂ according to Claim 12, whose two redox states, which interconvert through the formation or breaking of a σ-bond, have absorption maxima which differ by at least 70 nm, preferably by at least 100 nm, where at least one of the absorption maxima is in the visible part of the spectrum.

14. Electrochromic compound RED₁ or OX₂ according to one or both of Claims 12 and 13, in which the redox state which absorbs at long wavelength exists either with the σ-bond open or closed, where this redox state which absorbs at long wavelength can be generated either by reduction or by oxidation.

15. Electrochromic compound according to one or more of Claims 12 to 14, **characterized in that** it conforms to one of the redox states of the following types: 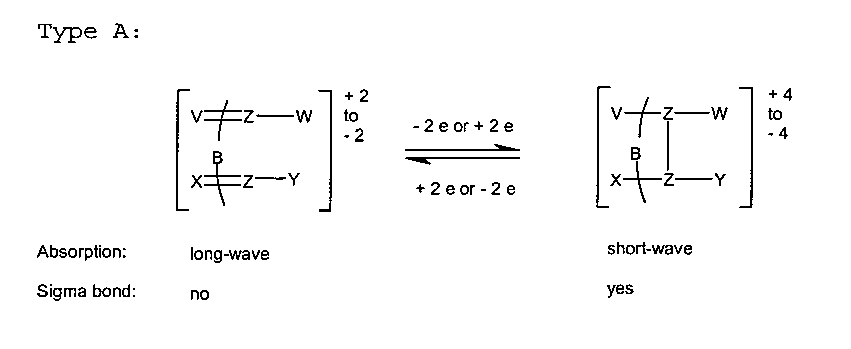 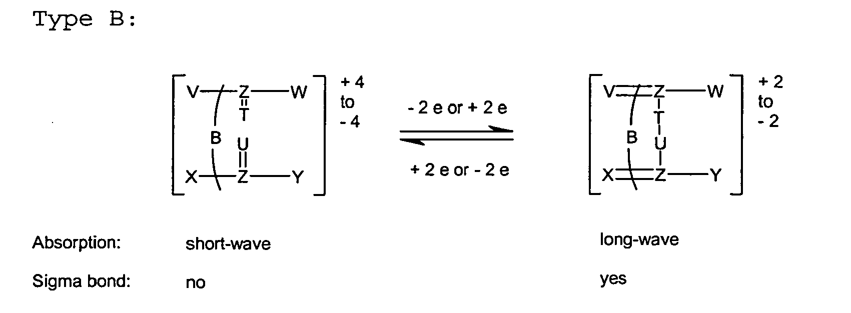 in which
the units V=Z-W and X=Z-Y which absorb at long wavelength represent methine dyes
and
B represents a bridge.

16. Electrochromic compound according to one or more of Claims 12 to 15, **characterized in that** it conforms to the formula (I) 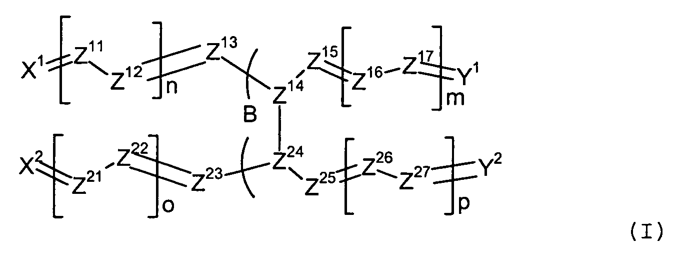 in which
X¹, X², Y¹ and Y², independently of one another, are a hetero atom, such as N, O, S, Se or P, which, in the case of O, S and Se, may also carry a substituent and is then positively charged and in the case of N and P may also carry two substituents and in the second case is positively charged,
Z¹¹ to Z¹⁷ and Z²¹ to Z²⁷, independently of one another, are C, which also carries a substituent, or N,
B is a bridge formed between one of the atoms in the group X¹, Z¹¹ to Z¹³, Z¹⁵ to Z¹⁷ and Y¹, and one of the atoms in group X², Z²¹ to Z²³, Z²⁵ to Z²⁷ and Y², and
n, m, o and p, independently of one another, are an integer from 0 to 5.

17. Electrochromic compound according to one or more of Claims 12 to 15, **characterized in that** it conforms to the formula (II) 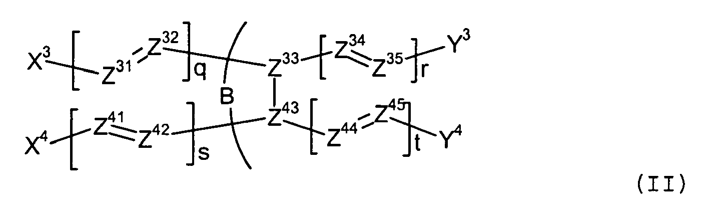 in which
X³, X⁴, Y³ and Y⁴, independently of one another, are a hetero atom, such as N, O, S, Se or P, which, in the case of O, S and Se, also carries a substituent or a negative charge and in the case of N and P also carries two substituents,
Z³¹ to Z³⁵ and Z⁴¹ to Z⁴⁵, independently of one another, are C, which also carries a substituent, or N,
B is a bridge formed between one of the atoms in the group X³, Z³¹, Z³², Z³⁴, Z³⁵ and Y³ and one of the atoms in the group X⁴, Z⁴¹, Z⁴², Z⁴⁴, Z⁴⁵ and Y⁴, and
q, r, s and t, independently of one another, are an integer from 0 to 5,
with the restriction that it is not simultaneously the case that
X³, X⁴, Y³ and Y⁴ are dimethylamino or methoxy or X³-X⁴ and/or Y³-Y⁴ are a bridge of the formula -O-,
(Z³¹=Z³²)_{q}, (Z⁴¹=Z⁴²)ₛ, (Z³⁴=Z³⁵)ᵣ and (Z⁴⁴=Z⁴⁵)ₜ are o-or p-phenylene,
Z³³-Z⁴³ are a tetravalent radical of the formula 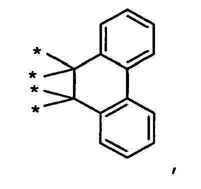
in which the bonds denoted by asterisks (*) are the linking points.

18. Electrochromic compound according to one or more of Claims 12 to 15, **characterized in that** it conforms to the formula (III) 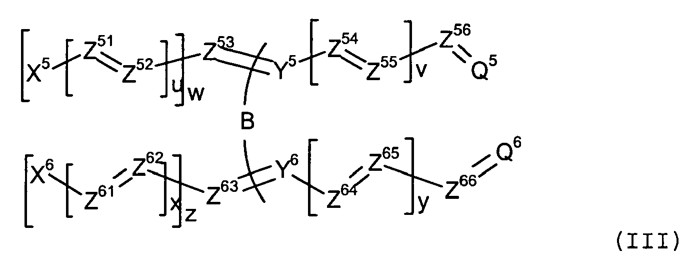 in which
X⁵ and X⁶, independently of one another, are a hetero atom, such as N, O, S, Se or P, which, in the case of O, S and Se, also carries a substituent or a negative charge and in the case of N and P also carries two substituents,
Y⁵ and Y⁶, independently of one another, are a hetero atom, such as N or P, or C, which also carries a substituent,
Q⁵ and Q⁶, independently of one another, are a hetero atom, such as N or P, which also carry a substituent, or C, which also carries two substituents,
Z⁵¹, Z⁵², Z⁵⁴ to Z⁵⁶ and Z⁶¹, Z⁶², Z⁶⁴ to Z⁶⁶, independently of one another, are C, which also carries a substituent, or N,
Z⁵³ to Z⁶³ are C, which also carries a substituent if w or z is 1,
B is a bridge formed between one of the atoms in the group X⁵, Z⁵¹ to Z⁵⁶ and Q⁵ and one of the atoms in the group X⁶, Z⁶¹ to Z⁶⁶ and Q⁶,
w and z, independently of one another, are 1 or 2, and
u, v, x and y, independently of one another, are an integer from 0 to 5.

19. Electrochromic compound according to one of Claims 16 to 18, **characterized in that** the bridge B formed by the substituents of two atoms in the groups X, Y, Z or Q results in the formation of a six-membered ring.

20. Electrochromic medium which comprises at least one electrochromic compound of types A and/or B, preferably of the formulae (I), (II) and/or (III),
where the residues have the meanings indicated in Claims 4 to 9.

21. Use of the electrochromic device according to one or more of Claims 1 to 11 as window or dividing panel or sight protection panel or glazing or roof glazing or light filter or mirror or display device.

## Revendications

1. Dispositif électrochrome, contenant deux plaques ou feuilles, dont au moins l'une est transparente, et qui sont munies d'une couche conductrice sur les côtés se faisant face, au moins l'une des couches conductrices étant transparente, dans lequel les plaques ou les feuilles et une bague d'étanchéité définissent un volume dans lequel se trouve un milieu électrochrome qui contient au moins un composé réductible OX₂ et au moins un composé oxydable RED₁ qui, en enlevant des électrons à la cathode ou en cédant des électrons à l'anode, se transforment en leur état rédox correspondant RED₂ et OX₁, les états rédox d'origine OX₂ et RED₁ se reformant à chaque fois après l'équilibrage des charges entre RED₂ et OX₁, **caractérisé en ce qu'**au moins un RED₁ ou un OX₂ est un composé électrochrome dans lequel deux unités chromogènes identiques ou différentes sont liées par l'intermédiaire d'un pont de manière que, lors de l'oxydation ou de la réduction, il se forme ou se rompt une liaison σ entre les deux unités avec un changement de coloration du composé en question.

2. Dispositif électrochrome selon la revendication 1, **caractérisé en ce que** les deux états rédox du composé électrochrome RED₁ ou OX₂, qui se transforment l'un en l'autre par formation ou rupture d'une liaison σ, possèdent des maximums d'absorption qui se distinguent d'au moins 70 nm, de préférence d'au moins 100 nm, au moins l'un des maximums d'absorption se situant dans la partie visible du spectre.

3. Dispositif électrochrome selon l'une des revendications 1 et 2 ou les deux, **caractérisé en ce que** l'état rédox absorbant aux grandes longueurs d'onde se présente avec une liaison σ soit ouverte, soit fermée, cet état redox absorbant aux grandes longueurs d'onde pouvant être obtenu aussi bien par réduction que par oxydation.

4. Dispositif électrochrome selon l'une ou plusieurs des revendications 1 à 3, **caractérisé en ce que** les deux états rédox OX₂ et RED₂ ou RED₁ et OX₁ du composé électrochrome correspondent à l'un des types suivants: 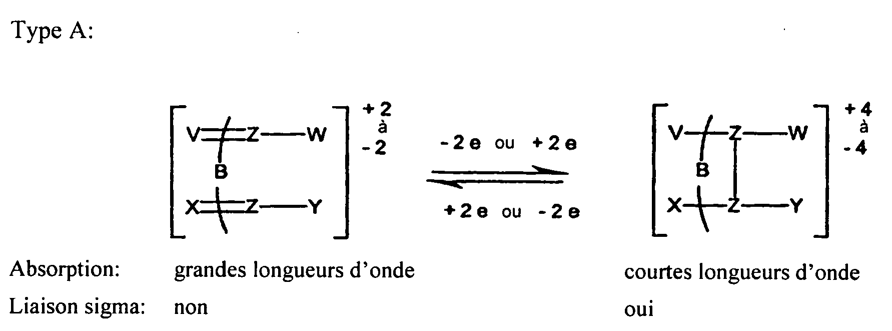 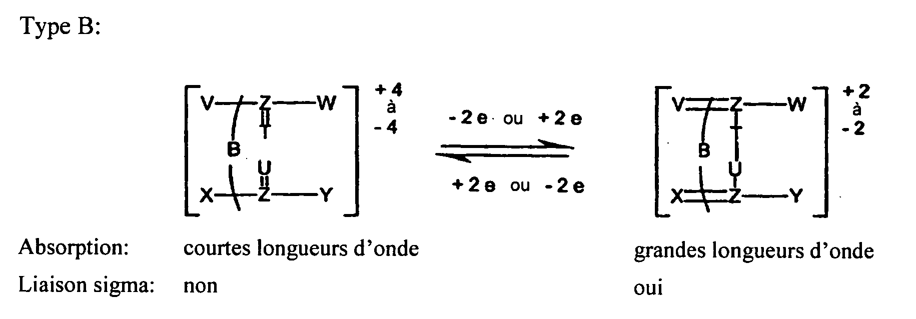 où
les unités absorbant aux grandes longueurs d'onde V=Z-W et X=Z-Y représentent des colorants méthine, et
B représente un pont.

5. Dispositif électrochrome selon l'une ou plusieurs des revendications 1 à 4, **caractérisé en ce qu'**au moins un OX₂ correspond à la formule (I) 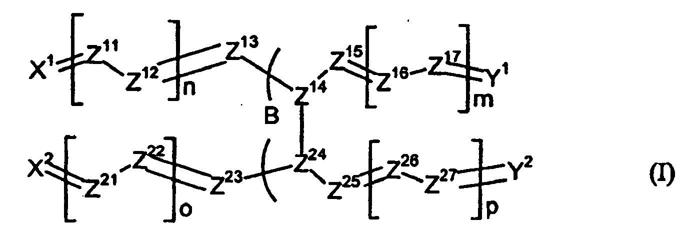 dans laquelle
X¹, X², Y¹ et Y² représentent, indépendamment les uns des autres, un hétéroatome comme N, O, S, Se ou P, qui, dans le cas de O, S et Se, peut porter un substituant supplémentaire et est alors chargé positivement, et, dans le cas de N et P, peut porter un ou deux substituants supplémentaires et, dans le deuxième cas, est chargé positivement,
Z¹¹ à Z¹⁷ et Z²¹ à Z²⁷ représentent, indépendamment les uns des autres, C, qui porte un substituant supplémentaire, ou N,
B représente un pont qui est formé entre l'un des atomes du groupe X¹, Z¹¹ à Z¹³, Z¹⁵ à Z¹⁷ et Y¹ et l'un des atomes du groupe X², Z²¹ à Z²³, Z²⁵ à Z²⁷ et Y², et
n, m, o et p représentent indépendamment les uns des autres un nombre entier de 0 à 5.

6. Dispositif électrochrome selon l'une ou plusieurs des revendications 1 à 4, **caractérisé en ce qu'**au moins un RED₁ correspond à la formule (II) 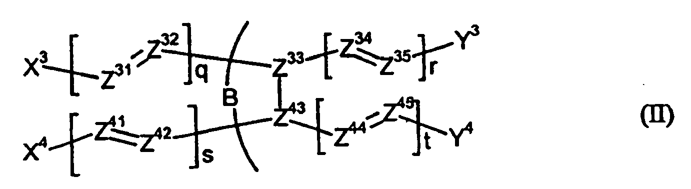 dans laquelle
X³, X⁴, Y³ et Y⁴ représentent, indépendamment les uns des autres, un hétéroatome
comme N, O, S, Se ou P, qui, dans le cas de O, S et Se, porte un substituant supplémentaire ou une charge négative, et, dans le cas de N et P, porte deux substituants supplémentaires,
Z³¹ à Z³⁵ et Z⁴¹ à Z⁴⁵ représentent, indépendamment les uns des autres, C, qui porte un substituant supplémentaire, ou N,
B représente un pont qui est formé entre l'un des atomes du groupe X³, Z³¹, Z³², Z³⁴, Z³⁵ et Y³ et l'un des atomes du groupe X⁴, Z⁴¹, Z⁴², Z⁴⁴, Z⁴⁵ et Y⁴, et
q, r, s et t représentent indépendamment les uns des autres un nombre entier de 0 à 5.

7. Dispositif électrochrome selon l'une ou plusieurs des revendications 5 à 6, **caractérisé en ce qu'**au moins un atome X¹, X², Y¹ ou Y² ou X³, X⁴, Y³ ou Y⁴ est un élément d'un cycle hétérocyclique.

8. Dispositif électrochrome selon l'une ou plusieurs des revendications 1 à 4, **caractérisé en ce qu'**au moins un RED₁ correspond à la formule (III) 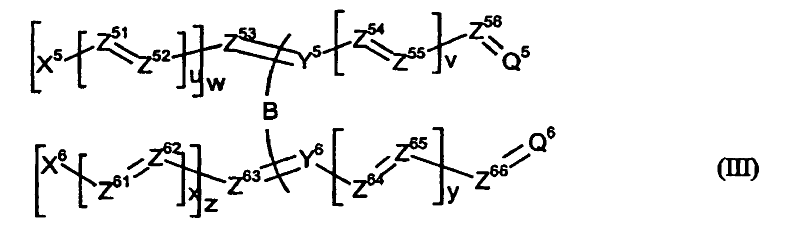 dans laquelle
X⁵ et X⁶ représentent indépendamment l'un de l'autre un hétéroatome comme N, O, S, Se ou P, qui, dans le cas de O, S et Se, porte un substituant supplémentaire ou une charge négative, et, dans le cas de N et P, porte deux substituants supplémentaires,
Y⁵ et Y⁶ représentent indépendamment l'un de l'autre un hétéroatome comme N ou P, ou C qui porte un substituant supplémentaire,
Q⁵ et Q⁶ représentent indépendamment l'un de l'autre un hétéroatome comme N ou P, qui portent un substituant supplémentaire, ou C qui porte deux substituants supplémentaires,
Z⁵¹, Z⁵², Z⁵⁴ à Z⁵⁶ et Z⁶¹, Z⁶², Z⁶⁴ à Z⁶⁶ représentent indépendamment les uns des autres C qui porte un substituant supplémentaire, ou N,
Z⁵³ et Z⁶³ représentent C qui porte un substituant supplémentaire lorsque w ou z est 1,
B représente un pont qui est formé entre l'un des atomes du groupe X⁵, Z⁵¹ à Z⁵⁶ et Q⁵ et l'un des atomes du groupe X⁶, Z⁶¹ à Z⁶⁶ et Q⁶,
w et z représentent indépendamment l'un de l'autre 1 ou 2 et
u, v, x et y représentent, indépendamment les uns des autres, un nombre entier de 0 à 5.

9. Dispositif électrochrome selon la revendication 8, **caractérisé en ce que** le pont B est formé entre l'un des atomes du groupe Z⁵⁴ à Z⁵⁶ et Q⁵ et l'un des atomes du groupe Z⁶⁴ à Z⁶⁶ et Q⁶, l'atome Z⁵⁴, Z⁵⁵, Z⁵⁶, Z⁶⁴, Z⁶⁵ et Z⁶⁶ correspondant devant être C.

10. Dispositif électrochrome selon l'une ou plusieurs des revendications 1 à 9, **caractérisé en ce que** les colorants méthine formés par la rupture d'une liaison ou la formation d'une liaison par oxydation ou réduction appartiennent à l'une des classes suivantes: des streptocyanines, des hémicyanines, des hémicyanines phénylogues, des cyanines, des oxonols, des bétaïnes, des neutrométhines, des phénazines, des oxazines, des thiazines, des bisazines, des diphénylméthanes éventuellement pontés, des triphénylméthanes éventuellement pontés, des (mono- ou diphényl)-(mono- ou dihétéroaryl)méthanes, des trihétéroarylméthanes, des acridines, des xanthènes, des thioxanthènes.

11. Dispositif électrochrome selon l'une ou plusieurs des revendications 5 à 9, **caractérisé en ce que**, dans la formule (I) et/ou (II) et/ou (III), les paires X¹ et X², X³ et X⁴, X⁵ et X⁶, Y¹ et Y², Y³ et Y⁴, Y⁵ et Y⁶, Z¹¹ et Z²¹, Z¹² et Z²², Z¹³ et Z²³, Z¹⁴ et Z²⁴, Z¹⁵ et Z²⁵, Z¹⁶ et Z²⁶, Z¹⁷ et Z²⁷, Z³¹ et Z⁴¹, Z³² et Z⁴², Z³³ et Z⁴³, Z³⁴ et Z⁴⁴, Z³⁵ et Z⁴⁵, Z⁵¹ et Z⁶¹, Z⁵² et Z⁶², Z⁵³ et Z⁶³, Z⁵⁴ et Z⁶⁴, Z⁵⁵ et Z⁶⁵, Z⁵⁶ et Z⁶⁶, Q⁵ et Q⁶, n et o, m et p, q et s, r et t, u et x, v et y, w et z sont identiques.

12. Composé électrochrome dans lequel deux unités chromogènes identiques ou différentes sont liées par au moins un pont de manière que, lors de l'oxydation ou de la réduction, une liaison σ soit formée ou rompue entre les deux unités avec un changement de coloration du composé en question.

13. Composé électrochrome RED₁ ou OX₂ selon la revendication 12, dont les deux états rédox qui se transforment l'un en l'autre par formation ou rupture d'une liaison σ possèdent des maximums d'absorption qui se distinguent d'au moins 70 nm, de préférence d'au moins 100 nm, au moins l'un des maximums d'absorption se situant dans la partie visible du spectre.

14. Composé électrochrome RED₁ ou OX₂ selon l'une des revendications 12 et 13 ou les deux, dans lequel l'état rédox absorbant aux grandes longueurs d'onde se trouve à l'état de liaison σ soit ouverte, soit fermée, cet état redox absorbant aux grandes longueurs d'onde pouvant être obtenu aussi bien par réduction que par oxydation.

15. Composé électrochrome selon l'une ou plusieurs des revendications 12 à 14, **caractérisé en ce qu'**il correspond à l'un des états rédox des types suivants: 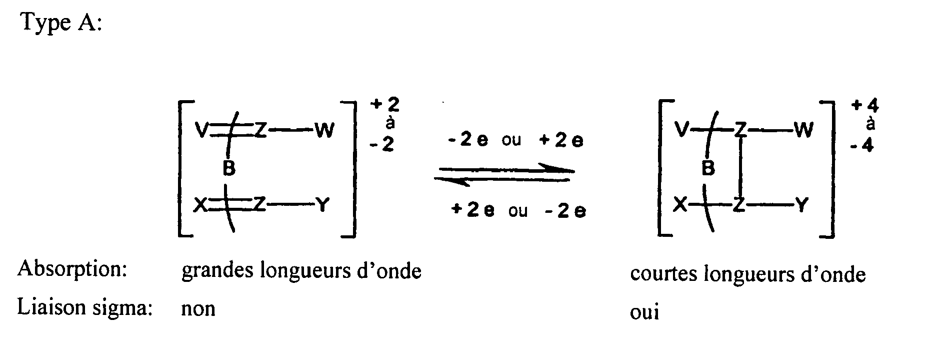 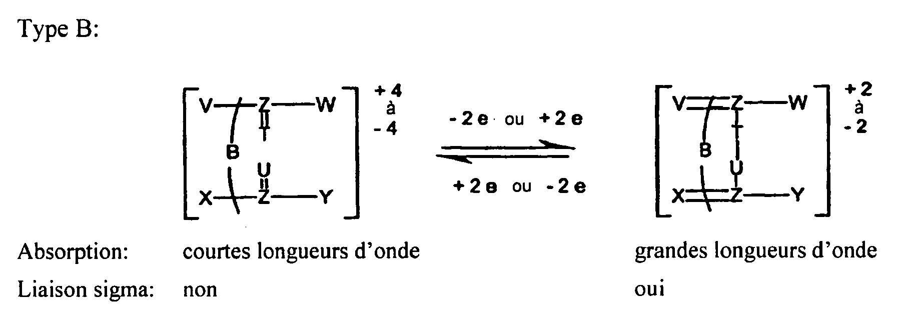 où
les unités absorbant aux grandes longueurs d'onde V=Z-W et X=Z-Y représentent des colorants méthine, et
B représente un pont.

16. Composé électrochrome selon l'une ou plusieurs des revendications 12 à 15, **caractérisé en ce qu'**il correspond à la formule (I) 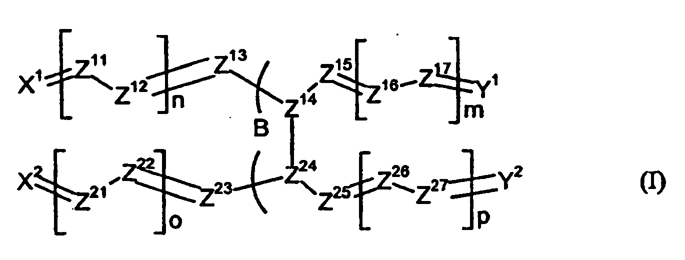 dans laquelle
X¹, X², Y¹ et Y² représentent, indépendamment les uns des autres, un hétéroatome
comme N, O, S, Se ou P, qui, dans le cas de O, S et Se, peut porter un substituant supplémentaire et est alors chargé positivement, et, dans le cas de N et P, peut porter un ou deux substituants supplémentaires et, dans le deuxième cas, est chargé positivement,
Z¹¹ à Z¹⁷ et Z²¹ à Z²⁷ représentent, indépendamment les uns des autres, C, qui porte un substituant supplémentaire, ou N,
B représente un pont qui est formé entre l'un des atomes du groupe X¹, Z¹¹ à Z¹³, Z¹⁵ à Z¹⁷ et Y¹ et l'un des atomes du groupe X², Z²¹ à Z²³, Z²⁵ à Z²⁷ et Y², et
n, m, o et p représentent indépendamment les uns des autres un nombre entier de 0 à 5.

17. Composé électrochrome selon l'une ou plusieurs des revendications 12 à 15, **caractérisé en ce qu'**il correspond à la formule (II) 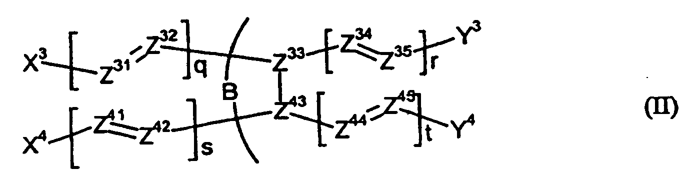 dans laquelle
X³, X⁴, Y³ et Y⁴ représentent, indépendamment les uns des autres, un hétéroatome
comme N, O, S, Se ou P, qui, dans le cas de O, S et Se, porte un substituant supplémentaire ou une charge négative, et, dans le cas de N et P, porte deux substituants supplémentaires,
Z³¹ à Z³⁵ et Z⁴¹ à Z⁴⁵ représentent, indépendamment les uns des autres, C qui porte un substituant supplémentaire, ou N,
B représente un pont qui est formé entre l'un des atomes du groupe X³, Z³¹, Z³²,
Z³⁴, Z³⁵ et Y³ et l'un des atomes du groupe X⁴, Z⁴¹, Z⁴², Z⁴⁴, Z⁴⁵ et Y⁴, et q, r, s et t représentent indépendamment les uns des autres un nombre entier de 0 à 5, avec la restriction selon laquelle on n'a pas en même temps:
X³, X⁴, Y³ et Y⁴ = diméthylamino ou méthoxy ou X³-X⁴ et/ou Y³-Y⁴ représentent un pont de formule -O-,
(Z³¹=Z³²)_{q}, (Z⁴¹=Z⁴²)ₛ, (Z³⁴=Z³⁵)ᵣ et (Z⁴⁴=Z⁴⁵)ₜ = o- ou p-phénylène,
Z³³-Z⁴³ représente un reste tétravalent de formule 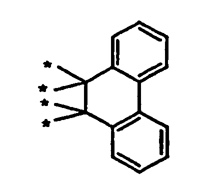 dans laquelle les liaisons marquées par une astérisque (*) représentent les points de rattachement.

18. Composé électrochrome selon l'une ou plusieurs des revendications 12 à 15, **caractérisé en ce qu'**il correspond à la formule (III) 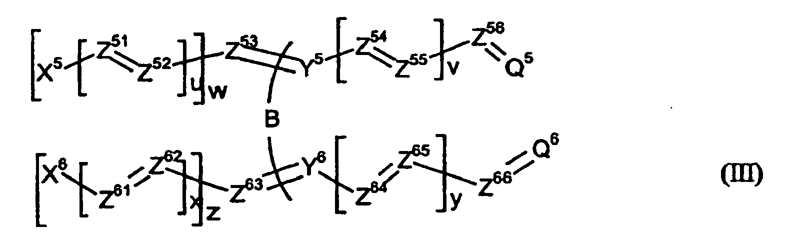 dans laquelle
X⁵ et X⁶ représentent indépendamment l'un de l'autre un hétéroatome comme N, O, S, Se ou P, qui, dans le cas de O, S et Se, porte un substituant supplémentaire ou une charge négative, et, dans le cas de N et P, porte deux substituants supplémentaires,
Y⁵ et Y⁶ représentent indépendamment l'un de l'autre un hétéroatome comme N ou P, ou C qui porte un substituant supplémentaire,
Q⁵ et Q⁶ représentent indépendamment l'un de l'autre un hétéroatome comme N ou P, qui portent un substituant supplémentaire, ou C qui porte deux substituants supplémentaires,
Z⁵¹, Z⁵², Z⁵⁴ à Z⁵⁶ et Z⁶¹, Z⁶², Z⁶⁴ à Z⁶⁶ représentent indépendamment les uns des autres C qui porte un substituant supplémentaire, ou N,
Z⁵³ et Z⁶³ représentent C qui porte un substituant supplémentaire lorsque w ou z est 1,
B représente un pont qui est formé entre l'un des atomes du groupe X⁵, Z⁵¹ à Z⁵⁶ et Q⁵ et l'un des atomes du groupe X⁶, Z⁶¹ à Z⁶⁶ et Q⁶,
w et z représentent indépendamment l'un de l'autre 1 ou 2 et
u, v, x et y représentent,indépendamment les uns des autres, un nombre entier de 0 à 5.

19. Composé électrochrome selon l'une des revendications 16 à 18, **caractérisé en ce que** le pont B qui est formé par les substituants de deux atomes des groupes X, Y, Z ou Q, entraîne la formation d'un cycle à 6 chaînons.

20. Milieu électrochrome contenant au moins un composé électrochrome de type A et/ou B, de préférence de formule (I), (II) et/ou (III), où les restes ont les significations données dans les revendications 4 à 9.

21. Utilisation du dispositif électrochrome selon l'une ou plusieurs des revendications 1 à 11 comme fenêtre, ou vitre de séparation, ou verre protecteur de vue, ou vitrage, ou vitrage de toit, ou filtre de lumière, ou miroir, ou dispositif d'affichage.
